# EUROPEAN PATENT SPECIFICATION

(11) **EP 4 364 049 B1**
(45) Date of publication and mention of the grant of the patent: **28.10.2026**
(21) Application number: 22850763.8
(22) Date of filing: 07.12.2022
(51) Int. Cl.: G06N 3/098, G06N 3/096, G06N 3/084, G06N 3/045

(54) **DECENTRALIZED LEARNING OF MACHINE LEARNING MODEL(S) THROUGH UTILIZATION OF STALE UPDATES(S) RECEIVED FROM STRAGGLER COMPUTING DEVICE(S)**
DEZENTRALES LERNEN VON MASCHINENLERNMODELLEN DURCH VERWENDUNG VON VERALTETEN AKTUALISIERUNGEN, DIE VON STRAGLER-COMPUTERVORRICHTUNG(EN) EMPFANGEN WERDEN
APPRENTISSAGE DÉCENTRALISÉ DE MODÈLE(S) D'APPRENTISSAGE AUTOMATIQUE PAR L'UTILISATION DE MISE(S) À JOUR PÉRIMÉE(S) REÇUE(S) D'UN OU DE PLUSIEURS DISPOSITIFS INFORMATIQUES RETARDATAIRES

(30) Priority: 21.09.2022 US 202263408558 P; 06.12.2022 US 202218075757
(43) Date of publication of application: 08.05.2024
(73) Proprietor: Google LLC, Mountain View, CA 94043 (US)
(72) Inventor: HARD, Andrew, Mountain View, California 94043 (US); AUGENSTEIN, Sean, Mountain View, California 94043 (US); ANIL, Rohan, Mountain View, California 94043 (US); MATHEWS, Rajiv, Mountain View, California 94043 (US); MCCONNAUGHEY, Lara, Mountain View, California 94043 (US); AMID, Ehsan, Mountain View, California 94043 (US); GIRGIS, Antonious, Mountain View, California 94043 (US)
(74) Representative: Marks & Clerk GST
(86) International application number: PCT/US2022/052140
(87) International publication number: WO 2024/063790

(56) References cited:
- YUJING CHEN ET AL: "Asynchronous Online Federated Learning for Edge Devices with Non-IID Data", ARXIV.ORG, CORNELL UNIVERSITY LIBRARY, 201 OLIN LIBRARY CORNELL UNIVERSITY ITHACA, NY 14853, 21 October 2020 (2020-10-21), XP081792426
- "ECML PKDD 2018 Workshops : DMLE 2018 and IoTStream 2018, Dublin, Ireland, September 10-14, 2018, Revised Selected Papers", vol. 967, 8 March 2019, SPRINGER INTERNATIONAL PUBLISHING, Cham, ISBN: 978-3-030-14880-5, ISSN: 1865-0929, article SPRAGUE MICHAEL R. ET AL: "Asynchronous Federated Learning for Geospatial Applications : DMLE 2018 and IoTStream 2018, Dublin, Ireland, September 10-14, 2018, Revised Selected Papers", pages: 21 - 28, XP093047250, DOI: 10.1007/978-3-030-14880-5_2
- QIYUAN WANG ET AL: "AsyncFedED: Asynchronous Federated Learning with Euclidean Distance based Adaptive Weight Aggregation", ARXIV.ORG, CORNELL UNIVERSITY LIBRARY, 201 OLIN LIBRARY CORNELL UNIVERSITY ITHACA, NY 14853, 7 June 2022 (2022-06-07), XP091240926
- MA QIANPIAO ET AL: "FedSA: A Semi-Asynchronous Federated Learning Mechanism in Heterogeneous Edge Computing", IEEE JOURNAL ON SELECTED AREAS IN COMMUNICATIONS, IEEE SERVICE CENTER, PISCATAWAY, US, vol. 39, no. 12, 6 October 2021 (2021-10-06), pages 3654 - 3672, XP011888922, ISSN: 0733-8716, [retrieved on 20211118], DOI: 10.1109/JSAC.2021.3118435
- AHMED M ABDELMONIEM ET AL: "Resource-Efficient Federated Learning", ARXIV.ORG, CORNELL UNIVERSITY LIBRARY, 201 OLIN LIBRARY CORNELL UNIVERSITY ITHACA, NY 14853, 1 November 2021 (2021-11-01), XP091091646
- CHENHAO XU ET AL: "Asynchronous Federated Learning on Heterogeneous Devices: A Survey", ARXIV.ORG, CORNELL UNIVERSITY LIBRARY, 201 OLIN LIBRARY CORNELL UNIVERSITY ITHACA, NY 14853, 11 August 2022 (2022-08-11), XP091292237

## Description

### Background

Decentralized learning of machine learning (ML) model(s) is an increasingly popular ML technique for updating ML model(s) due to various privacy considerations. In one common implementation of decentralized learning, an on-device ML model is stored locally on a client device of a user, and a global ML model, that is a cloud-based counterpart of the on-device ML model, is stored remotely at a remote system (e.g., a server or cluster of servers). During a given round of decentralized learning, the client device, using the on-device ML model, can process an instance of client data detected at the client device to generate predicted output, and can generate an update for the global ML model based on processing the instance of client data. Further, the client device can transmit the update to the remote system. The remote system can utilize the update received from the client device, and additional updates generated in a similar manner at additional client devices and that are received from the additional client devices, to update global weight(s) of the global ML model. The remote system can transmit the updated global ML model (or updated global weight(s) of the updated global ML model), to the client device and the additional client devices. The client device and the additional client devices can then replace the respective on-device ML models with the updated global ML model (or replace respective on-device weight(s) of the respective on-device ML models with the updated global weight(s) of the global ML model), thereby updating the respective on-device ML models.

However, the client device and the additional client devices that participate in the given round of decentralized learning have different latencies associated with generating the respective updates and/or transmitting the respective updates to the remote system. For instance, the client device and each of the additional client devices may only be able to dedicate a certain amount of computational resources to generating the respective updates, such that the respective updates are generated at the client device and each of the additional client devices at different rates. Also, for instance, the client device and each of the additional client devices may have different connection types and/or strengths, such that the respective updates are transmitted to the remote system and from the client device and each of the additional client devices at different rates. Nonetheless, the remote system may have to wait on the respective updates from one or more of the slowest client devices (also referred to as "straggler devices"), from among the client device and the additional client devices, prior to updating the global ML model based on the respective updates when the decentralized learning utilizes a synchronous training algorithm. As a result, the updating of the global ML model is performed in a sub-optimal manner since the remote system is forced to wait on the respective updates from these straggler devices (also referred to as "stale updates").

One common technique for obviating issues caused by these straggler devices when the decentralized learning utilizes a synchronous training algorithm is to only utilize the respective updates received from a fraction of the client device and/or the additional client devices that provide the respective updates at the fastest rates, and to discard the stale updates received from any of these straggler devices. However, the resulting global ML model that is updated based on only the respective updates received from a fraction of the client device and/or the additional client devices that provide the respective updates at the fastest rates may be biased against data domains that are associated with these straggler devices and/or have other unintended consequences. Another common technique for obviating issues caused by these straggler devices in decentralized learning is to utilize an asynchronous training algorithm. While utilization of an asynchronous training algorithm in decentralized learning does obviate some issues caused by these straggler devices, the updating of the global ML model is still performed in a sub-optimal manner since the remote system lacks a strong representation of these stale updates received from these straggler devices.

Accordingly, there is a need in the art for techniques that obviate issues caused by these stale updates received from these straggler devices by not only allowing the remote system to move forward in updating the global ML model without having to wait for these stale updates from these straggler devices, but also in utilizing these stale updates that are received from these straggler devices in a more efficient manner to strengthen the representation of these stale updates received from these straggler devices.
"Asynchronous Online Federated Learning for Edge Devices with Non-IID Data" (by Yujing Chen et al) relates to a machine learning paradigm where a shared central model is learned across distributed devices while the training data remains on these devices.

### Summary

The invention is set out in independent claims 1 and 12-15. Preferred aspects of the invention are set out in the dependent claims.

Implementations described herein are directed to various techniques for improving decentralized learning of global machine learning (ML) model(s). For example, for a given round of decentralized learning for updating the global ML model, remote processor(s) of a remote system (e.g., a server or cluster of servers) may transmit, to a population of computing devices, primary weights for a primary version of the global ML model, and cause each of the computing devices of the population to generate a corresponding update for the primary version of the global ML model via utilization of the primary version of the global ML model at each of the computing devices of the population. Further, the remote processor(s) may asynchronously receive, from one or more of the computing devices of the population, a first subset of the corresponding updates for the primary version of the global ML model, and cause, based on the first subset of the corresponding updates, the primary version of the global ML model to be updated to generate updated primary weights for an updated version of the global ML model. Notably, the first subset of the corresponding updates may be received during the given round of decentralized learning for updating of the given global ML model, and may include corresponding updates from less than all of the computing devices of the population. Accordingly, and even though not all of the computing devices of the population have provided the corresponding updates, the remote processor(s) may proceed with generating the updated primary weights for the updated version of the global ML model and refrain from waiting for the corresponding updates from one or more of the other computing devices of the population (*e.g*., to refrain from waiting for stale updates from straggler computing devices). Moreover, the remote processor(s) may cause one or more given additional rounds of decentralized learning for updating the global ML model to be implemented with corresponding additional populations of the client device, such that the primary version of the global ML model is continually updated.

However, and subsequent to the given round of decentralized learning for updating the global ML model (*e.g*., during one or more of the given additional rounds of decentralized learning for updating the global ML model), the remote processor(s) may asynchronously receive a second subset of the corresponding updates from one or more of the other computing devices of the population from one or more prior rounds of decentralized learning for updating the global ML model (*e.g*., asynchronously receive the stale updates from the straggler computing devices). Notably, when the second subset of the corresponding updates are received from one or more of the other computing devices of the population, the primary version of the global ML model has already been updated during the given round of decentralized learning for updating the global ML model (and possibly further updated during one or more of the given additional rounds of decentralized learning for updating the global ML model). Accordingly, causing the updated (or further updated) primary version of the global ML model to be updated based on the second subset of the corresponding updates is suboptimal due to the difference between the primary weights (*e.g*., utilized by one or more of the other computing devices in generating the corresponding updates) and the updated (or further updated) primary weights. Nonetheless, techniques described herein may still utilize the second subset of the corresponding updates to influence future updating of the primary version of the global ML model and/or a final version of the global ML model that is deployed.

In some implementations, the remote processor(s) may implement a technique that causes, based on the first subset of the corresponding updates and the second subset of the corresponding updates, the primary version of the global ML model (*e.g*., that was originally transmitted to the population of the computing devices during the given round of decentralized learning of the global ML model) to generate a corresponding historical version of the global ML model, and cause the corresponding historical version of the global ML model to be utilized as a corresponding teacher model for one or more of the given additional rounds of decentralized learning for updating the global ML model via distillation. This technique may be referred to "Federated Asynchronous Regularization with Distillation Using Stale Teachers" (FARe-DUST), and ensures that knowledge from the second subset of corresponding updates provided by one or more of the additional computing devices (*e.g*., the straggler computing devices) is distilled into the primary version of the global ML model during one or more of the given additional rounds of decentralized learning for updating the global ML model and without requiring that the remote processor(s) wait on the second subset of corresponding updates provided by one or more of the additional computing devices during the given round of decentralized learning for updating the global ML model.

In additional or alternative implementations, the remote processor(s) may implement a technique that causes, based on the first subset of the corresponding updates and the second subset of the corresponding updates, the primary version of the global ML model (*e.g*., that was originally transmitted to the population of the computing devices during the given round of decentralized learning of the global ML model) to generate a corresponding historical version of the global ML model, but causes the corresponding historical version of the global ML model to be combined with the updated primary version of the global ML model to generate an auxiliary version of the global ML model. The remote processor(s) may continue causing the primary version of the global ML model to be updated, causing additional corresponding historical versions of the global ML model to be generated (*e.g*., based on additional asynchronously receives stale updates from additional straggler computing devices during one or more of the given additional rounds of decentralized learning for updating the global ML model), and generating additional auxiliary versions of the global ML model, such that a most recent auxiliary version of the global ML model may be utilized as the final version of the global ML model. This technique may be referred to "Federated Asynchronous Straggler Training on Mismatched and Stale Gradients" (FeAST on MSG), and ensures that knowledge from the second subset of corresponding updates provided by one or more of the additional computing devices (*e.g*., the straggler computing devices) is aggregated into a unified auxiliary version of the global ML model.

As described in more detail herein, one or more of the given additional rounds of decentralized learning for updating of the global ML model may differ based on whether the remote processor(s) implement the FARe-DUST or FeAST on MSG technique. In various implementations, a developer or other user that is associated with the remote system may provide the remote processor(s) with an indication of whether to implement the FARe-DUST, the FeAST on MSG technique, or some combination of both techniques. In various implementations, the developer or other user that is associated with the remote system may provide the remote processor(s) with an indication of a type of a population of computing devices to be utilized in implementing the FARe-DUST, the FeAST on MSG technique, or some combination of both techniques. For example, the population of computing devices may include one or more client devices of respective users such that the corresponding updates may be generated in a manner that leverages a federated learning framework. Additionally, or alternatively, the population of computing devices may include one or more remote servers that are in addition to the remote system.

As used herein, a "round of decentralized learning" may be initiated when the remote processor(s) transmit data to a population of computing devices for purposes of updating a global ML model. The data that is transmitted to the population of computing devices for purposes of updating the global ML model may include, for example, primary weights for a primary version of the global ML model (or updated primary weights for an updated primary version of the global ML model for one or more subsequent rounds of decentralized learning for updating of the global ML model), one or more corresponding historical versions of the global ML model, other data that may be processed by the computing devices of the population in generating the corresponding updates (*e.g*., audio data, vision data, textual data, and/or other data), and/or any other data. Further, the round of decentralized data may be concluded when the remote processor(s) cause the primary weights for the primary version of the global ML model to be updated (or the updated primary weights for the updated primary version of the global ML model to be updated during one or more of the subsequent rounds of decentralized learning for updating of the global ML model). Notably, the remote processor(s) may cause the primary weights for the primary version of the global ML model to be updated (or the updated primary weights for the updated primary version of the global ML model to be updated during one or more of the subsequent rounds of decentralized learning for updating of the global ML model) based on one or more criteria. The one or more criteria may include, for example, a threshold quantity of corresponding updates being received from one or more of the computing devices of the population (*e.g*., such that any other corresponding updates that are received from one or more of the other computing devices of the population may be utilized in generating and/or updating corresponding historical versions of the global ML model), a threshold quantity of time lapsing since the round of decentralized learning was initiated (*e.g*., 5 minutes, 10 minutes, 15 minutes, 60 minutes, etc.), and/or other criteria.

As used herein, "the primary version of the global ML model" may correspond to an instance of a global ML model that is stored in remote storage of the remote system and that is continuously updated through multiple rounds of decentralized learning. Notably, the primary version of the global ML model may refer to the primary version of the global ML model itself, the primary weights thereof, or both. In various implementations, and subsequent to each round of decentralized learning, an additional instance the primary version of the global ML model may be stored in the remote storage of the remote system, such as an updated primary version of the global ML model after the given round of decentralized learning, a further updated primary version of the global ML model after a given additional round of decentralized learning, and so on for any further additional rounds of decentralized learning for updating of the global ML model. Accordingly, multiple primary versions of the global ML model may be stored in the remote storage of the remote system at any given time. In some versions of those implementations, each of multiple primary versions of the global ML model may be stored in the remote storage of the remote system and in association with an indication of a corresponding round of decentralized learning during which a corresponding version of the multiple primary versions of the global ML model was updated. As described in more detail herein, the indication of the corresponding round of decentralized learning during which the corresponding version of the multiple primary versions of the global ML model was updated enables other versions of the global ML model to be generated (*e.g*., corresponding historical versions of the global ML model, corresponding auxiliary versions of the global ML model, etc.).

By using techniques described herein, one or more technical advantages may be achieved. As one non-limiting example, by utilizing the stale updates received from the straggler computing devices to generate corresponding historical versions of the global ML model and/or corresponding auxiliary versions of the global ML model, a final version of the global ML model has more knowledge with respect to domains that are associated with these straggler computing devices and/or other unintended consequences are mitigated. As a result, the final version of the global ML model is more robust to the domains that are associated with these straggler computing devices. As another non-limiting example, consumption of computational resources by these straggler computing devices are not unnecessarily wasted since the stale updates generated by these straggler computing devices are utilized in generating the final version of the global ML model and are not simply wasted. As another non-limiting example, by utilizing the FARe-DUST technique and/or the FeAST on MSG technique described herein, the stale updates generated by these straggler computing devices are utilized in generating the final version of the global ML model in a more quick and efficient manner than other known techniques.

The above description is provided as an overview of some implementations of the present disclosure. Further description of those implementations, and other implementations, are described in more detail below.

### Brief Description of the Drawings

FIG. 1 depicts an example process flow that demonstrates various aspects of the present disclosure, in accordance with various implementations.
FIG. 2A depicts one example technique (*e.g*., "Federated Asynchronous Regularization with Distillation Using Stale Teachers" (FARe-DUST)) for utilizing stale update(s) received from straggler computing device(s) to improve decentralized learning of machine learning model(s).
FIG. 2B depicts another example technique (*e.g*., "Federated Asynchronous Straggler Training on Mismatched and Stale Gradients" (FeAST on MSG)) for utilizing stale update(s) received from straggler computing device(s) to improve decentralized learning of machine learning model(s).
FIG. 3 depicts a block diagram that demonstrates various aspects of the present disclosure, in accordance with various implementations.
FIG. 4 depicts a flowchart illustrating an example method of causing a primary version of a global machine learning model to be updated during a given round of decentralized learning of the global machine learning model, but receiving stale update(s) from straggler computing device(s) subsequent to the given round of decentralized learning of the global machine learning model, in accordance with various implementations.
FIG. 5A depicts a flowchart illustrating an example method of utilizing stale update(s) received from straggler computing device(s) to improve decentralized learning of machine learning model(s) (*e.g*., "Federated Asynchronous Regularization with Distillation Using Stale Teachers" (FARe-DUST)), in accordance with various implementations.
FIG. 5B depicts a flowchart illustrating another example method of utilizing stale update(s) received from straggler computing device(s) to improve decentralized learning of machine learning model(s) (*e.g*., "Federated Asynchronous Straggler Training on Mismatched and Stale Gradients" (FeAST on MSG)), in accordance with various implementations.
FIG. 6 depicts an example architecture of a computing device, in accordance with various implementations.

### Detailed Description

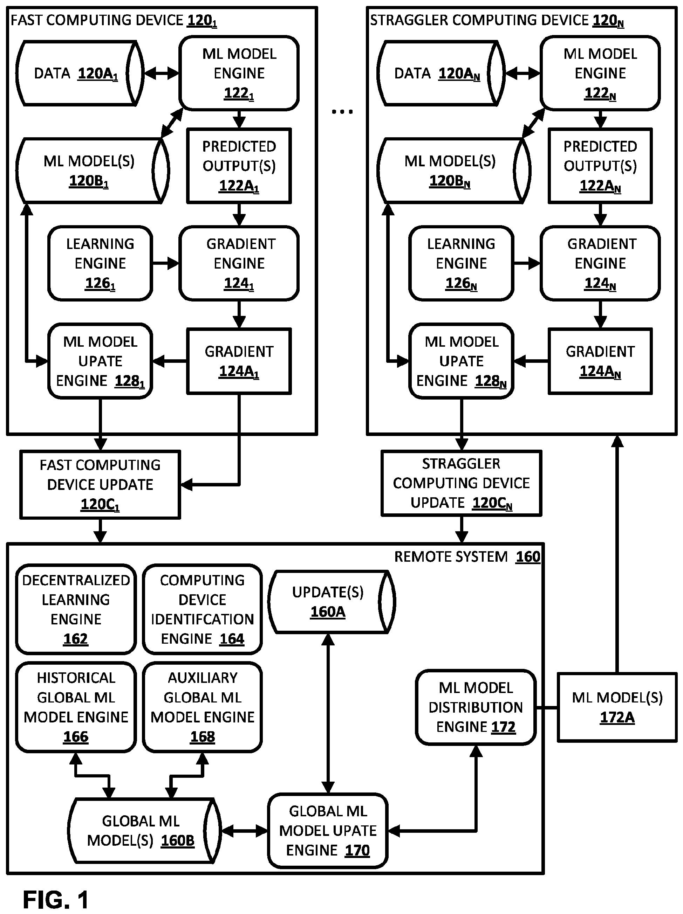

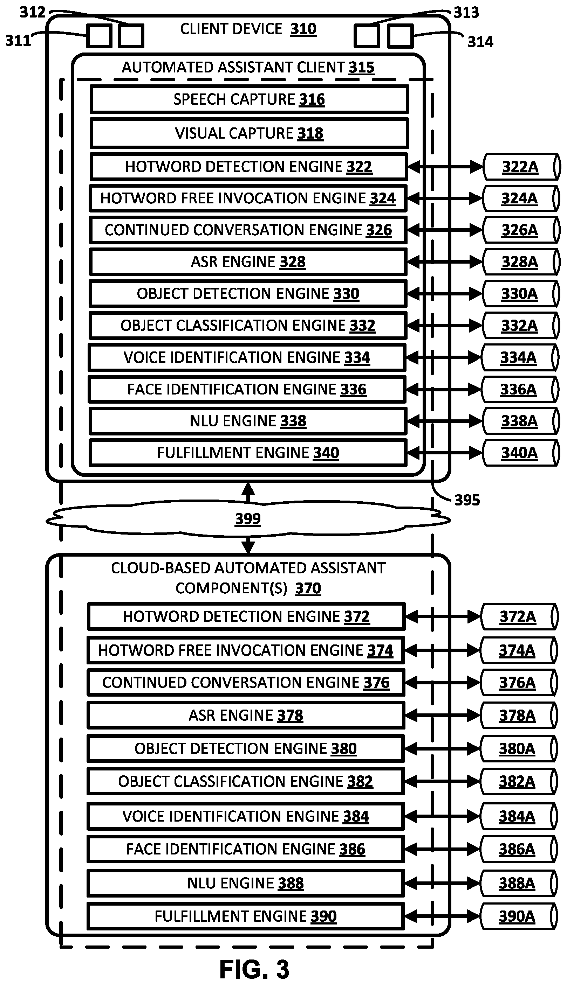

Turning now to FIG. 1, an example process flow that demonstrates various aspects of the present disclosure is depicted. A plurality of computing devices 120₁-120_{N} and a remote system 160 (*e.g.,* a remote server or cluster of remote servers) are illustrated in FIG. 1, and each include the components that are encompassed within the corresponding boxes of FIG. 1 that represent the computing devices 120₁-120_{N}, and the remote system, respectively. The plurality of computing devices 120₁-120_{N} and the remote system 160 may be utilized during one or more rounds of decentralized learning for updating of a global machine learning (ML) model (*e.g*., stored in global ML model(s) database 160B) as described herein. The plurality of computing devices 120₁-120_{N} may include, for example, client devices of respective users, other remote servers or other clusters of remote servers, and/or other computing devices. For example, the remote system 160 may facilitate decentralized learning of the global ML model through utilization of one or more of the plurality of computing devices 120₁-120_{N}. The global ML model may include any audio-based ML model, vision-based ML model, text-based ML model, and/or any other type of ML model. Some non-limiting examples of global ML models are described herein (*e.g*., with respect to FIG. 3), but it should be understood those ML models are provided for the sake of example and are not meant to be limiting.

In various implementations, a decentralized learning engine 162 of the remote system 160 may identify the global ML model (*e.g*., from the global ML model(s) database 160B) that is to be updated during a given round of decentralized learning for updating of the global ML model. In some implementations, the decentralized learning engine 162 may identify the global ML model that is to be updated using decentralized learning based on an indication provided by a developer or other user associated with the remote system 160. In additional or alternative implementations, the decentralized learning engine 162 may randomly select the global ML model that is to be updated using decentralized learning from the global ML model(s) database 160B and without receiving any indication from the developer or other user that is associated with the remote system 160. Although FIG. 1 is described with respect to the decentralized learning engine 162 identifying a single global ML model for decentralized learning, it should be understood that is for the sake of example and is not meant to be limiting. Rather, it should be understood that the decentralized learning engine 162 may identify multiple global ML models for decentralized learning, such that multiple rounds of decentralized learning of the respective multiple global ML models may be performed in a parallel manner.

In various implementations, a computing device identification engine 164 of the remote system 160 may identify a population of computing devices to participate in the given round of decentralized learning for updating of the global ML model. In some implementations, the computing device identification engine 164 may identify all available computing devices that are communicatively coupled to the remote system 160 (*e.g*., over one or more networks) for inclusion in the population of computing devices to participate in the given round of decentralized learning for updating of the global ML model. In other implementations, the computing device identification engine 164 may identify a particular quantity of computing devices (*e.g.*, 100 computing devices, 1,000 computing devices, 10,000 computing devices, and/or other quantities of computing devices) that are communicatively coupled to the remote system 160 for inclusion in the population of computing devices to participate in the given round of federated learning for updating of the global ML model. For the sake of example throughout FIG. 1, assume that at least computing device 120₁ and computing device 120_{N} are identified for inclusion in the population of client devices along with a plurality of additional client devices (*e.g*., as indicated by the ellipses between the computing device 120₁ and the computing device 120_{N}). Accordingly, and based on the computing device identification engine 164 identifying the computing device 120₁ and the computing device 120_{N} for inclusion in the population of computing devices to participate in the given round of federated learning for updating of the global ML model, an ML model distribution engine 172 may transmit at least primary weights for a primary version of the global ML model to the computing device 120₁ and the computing device 120_{N} (*e.g*., as indicated by 172A) to cause each of the computing devices of the population to generate a corresponding update for the primary version of the global ML model.

In various implementations, and in response to receiving at least the primary weights for the primary version of the global ML model from the remote system 160, the computing device 120₁ and the computing device 120_{N} may store the primary weights for the primary version of the global ML model in corresponding storage (*e.g.*, ML model(s) database 120B₁ of the computing device 120₁, ML model(s) database 120B_{N} of the computing device 120_{N}, and so on for each of the other computing devices of the population). In some versions of those implementations, the computing device 120₁ and the computing device 120_{N} may replace, in the corresponding storage, any prior weights for the global ML model with the primary weights for the primary version of the global ML model. Each of the computing device 120₁ and the computing device 120_{N} may utilize the primary weights for the primary version of the global ML model to generate the corresponding update for the global ML model during the given round of decentralized learning.

In various implementations, and in generating the corresponding update for the global ML model during the given round of decentralized learning, a corresponding ML model engine (*e.g*., ML model engine 122₁ of the computing device 120₁, ML model engine 122_{N} of the computing device 120_{N}, and so on for each of the other computing devices of the population) may process corresponding data (*e.g*., obtained from data database 120A₁ for the computing device 120₁, data database 120A_{N} for the computing device 120_{N}, and so on for each of the other computing devices of the population) and using the primary version of the ML model to generate one or more corresponding predicted outputs (*e.g*., predicted output(s) 122A₁ for the computing device 120₁, predicted output(s) 122A_{N} for the computing device 120_{N}, and so on for each of the other computing devices of the population). Notably, corresponding data and the one or more corresponding predicted outputs may depend on a type of the global ML model that is being updated during the given round of decentralized learning.

For example, in implementations where the global ML model is an audio-based ML model, the corresponding data that is processed to generate the one or more corresponding predicted outputs may be corresponding audio data and/or features of the corresponding audio data. Further, the one or more corresponding predicted outputs generated based on processing the corresponding audio data and/or the features of the corresponding audio data may depend on a type of the audio-based ML model. For instance, in implementations where the audio-based ML model is a hotword detection model, the one or more corresponding predicted outputs generated based on processing the corresponding audio data or the features of the corresponding audio data may be a value (*e.g.,* a binary value, a probability, a log likelihood, or another value) that is indicative of whether the audio data captures a particular word or phrase that, when detected, invokes a corresponding automated assistant. Also, for instance, in implementations where the audio-based ML model is an automatic speech recognition (ASR) model, the one or more corresponding predicted outputs generated based on processing the corresponding audio data or the features of the corresponding audio data may be a distribution of values (*e.g*., probabilities, log likelihoods, or another values) over a vocabulary of words or phrases and that recognized text (*e.g*., that is predicted to correspond to a spoken utterance captured in the audio data) may be determined based on the distribution of values over the vocabulary of words.

As another example, in implementations where the global ML model is a vision-based ML model, the corresponding data that is processed to generate the one or more corresponding predicted outputs may be corresponding vision data and/or features of the corresponding vision data. Further, the one or more corresponding predicted outputs generated based on processing the corresponding vision data and/or the features of the corresponding vision data may depend on a type of the vision-based ML model. For instance, in implementations where the vision-based ML model is an object classification model, the one or more corresponding predicted outputs generated based on processing the corresponding vision data and/or the features of the corresponding vision data may be a distribution of values (*e.g*., probabilities, log likelihoods, or another values) over a plurality of objects and that one or more given objects (*e.g*., that are predicted to be captured in one or more frames of the vision data) may be determined based on the distribution of values over the plurality of objects. Also, for instance, in implementations where the vision-based ML model is a face identification model, the one or more corresponding predicted outputs generated based on processing the corresponding vision data and/or the features of the corresponding vision data may be an embedding (or other lower-level representation) that may be compared to previously generated embeddings (or other lower-level representations) in a lower-dimensional space that may be utilized to identify users captured in one or more frames of the vision data.

As yet another example, in implementations where the global ML model is a text-based ML model, the corresponding data that is processed to generate the one or more corresponding predicted outputs may be corresponding textual data and/or features of the corresponding textual data. Further, the one or more corresponding predicted outputs generated based on processing the corresponding textual data data and/or the features of the corresponding textual data may depend on a type of the text-based ML model. For instance, in implementations where the text-based ML model is a natural language understanding (NLU) model, the one or more corresponding predicted outputs generated based on processing the corresponding textual data and/or the features of the corresponding textual data may be one or more annotations that identify predicted intents included in the textual data, one or more slot values for one or more parameters that are associated with one or more of the intents, and/or other NLU data.

Accordingly, it should be understood that the corresponding data processed by the corresponding ML model engines and using the primary version of the global ML model may vary based on the type of the global ML model that is being updated during the given round of decentralized learning. Although the above examples are described with respect to particular corresponding data being processed using particular corresponding ML models, it should be understood that is for the sake of example and is not meant to be limiting. Rather, it should be understood that any ML model that is capable of being trained using decentralized learning is contemplated herein.

In various implementations, and in generating the corresponding update for the global ML model during the given round of decentralized learning, a corresponding gradient engine (*e.g*., gradient engine 124₁ of the computing device 120₁, gradient engine 124_{N} of the computing device 120_{N}, and so on for each of the other computing devices of the population) may generate a corresponding gradient (*e.g*., gradient 124A₁ for the computing device 120₁, gradient 124_{N} for the computing device 120_{N}, and so on for each of the other computing devices of the population) based on at least the one or more corresponding predicted outputs (*e.g*., the predicted output(s) 122A₁ for the computing device 120₁, the predicted output(s) 122A_{N} for the computing device 120_{N}, and so on for each of the other computing devices of the population). In these implementations, the corresponding gradient engines may optionally work in conjunction with a corresponding learning engine (*e.g*., learning engine 126₁ of the computing device 120₁, learning engine 126_{N} of the computing device 120_{N}, and so on for each of the other computing devices of the population) in generating the corresponding gradients. The corresponding learning engines may cause the corresponding gradient engines to utilize various learning techniques (*e.g.*, supervised learning, semi-supervised learning, unsupervised learning, or any other learning technique or combination thereof) in generating the corresponding gradients.

For example, the corresponding learning engines may cause the corresponding gradient engines to utilize a supervised learning technique in implementations where there is a supervision signal available. Otherwise, the corresponding learning engines may cause the corresponding gradient engines to utilize a semi-supervised or unsupervised learning technique (*e.g*., a student-teacher technique, a masking technique, and/or another semi-supervised or unsupervised learning technique). For instance, assume that the global ML model is a hotword detection model utilized to process corresponding audio data and/or features of the corresponding audio data. Further assume that the one or more corresponding predicted outputs generated at a given computing device (*e.g*., the predicted output(s) 122A₁ for the computing device 120₁) indicate that the audio data does not capture a particular word or phrase to invoke a corresponding automated assistant. However, further assume that a respective user of the given computing device subsequently invoked the corresponding automated assistant through other means (*e.g*., via actuation of a hardware button or software button) immediately after the corresponding audio data being generated. In this instance, the subsequent invocation of the corresponding automated assistant may be utilized as a supervision signal. Accordingly, in this instance, the corresponding learning engine (*e.g*., the learning engine 126₁ for the computing device 120₁) may cause the corresponding gradient engine (*e.g*., the gradient engine 124₁ for the computing device 120₁) to compare the one or more predicted outputs (*e.g*., the predicted output(s) 122A₁ for the computing device 120₁) that (incorrectly) indicate the corresponding automated assistant should not be invoked to one or more ground truth outputs that (correctly) indicate should the corresponding automated assistant should be invoked to generate the corresponding gradient (*e.g*., the gradient 124A₁ for the computing device 120₁).

In contrast, further assume that the respective user of the given computing device did not subsequently invoke the corresponding automated assistant such that no supervision signal is available. In some of these instances, and according to a semi-supervised student-teacher technique, the corresponding learning engine (*e.g*., the learning engine 126₁ for the computing device 120₁) may process, using a teacher hotword detection model (*e.g*., stored in the ML model(s) database 120B₁, the global ML model(s) database 160B and/or other databases accessible by the client device 120₁), the corresponding audio data to generate one or more teacher outputs that are also indicative of whether the corresponding audio data captures the particular word or phrase that, when detected, invokes the corresponding automated assistant. In these instances, the teacher hotword detection model may be another hotword detection model utilized to generate the one or more corresponding predicted outputs or another, distinct hotword detection model. Further, the corresponding gradient engines 124₁ may compare the one or more corresponding predicted outputs and the one or more teacher outputs to generate the corresponding gradients.

In other instances, and according to a semi-supervised masking technique, the corresponding learning engine (*e.g*., the learning engine 126₁ for the computing device 120₁) may mask a target portion of the corresponding audio data (*e.g*., a portion of the data that may include the particular word or phrase in the audio data, and may cause the corresponding ML model engine (*e.g*., the ML model engine 122₁ for the computing device 120₁) to process, using the hotword detection model, other portions of the corresponding audio data in generating the one or more corresponding predicted outputs (*e.g*., the one or more predicted outputs 122A₁). The one or more corresponding predicted outputs may still include a value indicative of whether the target portion of the audio data is predicted to include the particular word or phrase based on processing the other portions of the corresponding audio data (*e.g*., based on features of the other portions of the corresponding audio data, such as mel-bank features, melfrequency cepstral coefficients, and/or other features of the corresponding audio data). In some of these instances, the corresponding learning engine (*e.g.*, the learning engine 126₁ for the computing device 120₁) may also process, using the hotword detection model, an unmasked version of the audio data to generate one or more benchmark outputs that includes a value of whether the corresponding audio data is predicted to include the particular word or phrase. Further, the corresponding gradient engine (*e.g*., the gradient engine 124₁ for the computing device 120₁) may compare the one or more corresponding predicted outputs and the one or more benchmark outputs generated by the learning engine 126₁ to generate the corresponding gradient 124A₁ (*e.g*., the gradient 124A₁ for the computing device 120₁).

Although the above examples of semi-supervised and unsupervised learning are described with respect to particular techniques, it should be understood that those techniques are provided as non-limiting examples of semi-supervised or unsupervised learning techniques and are not meant to be limiting. Rather, it should be understood that any other unsupervised or semi-supervised learning techniques are contemplated herein. Moreover, although the above examples are described with respect to hotword detection models, it should be understood that is also for the sake of example and is not meant to be limiting. Rather, it should be understood that the same or similar techniques may be utilized to generate the corresponding gradients in the same or similar manner.

In various implementations, the corresponding gradients may be the corresponding updates that are transmitted from each of the computing devices of the population and back to the remote system 160. In additional or alternative implementations, a corresponding ML model update engine (*e.g*., ML model update engine 128₁ of the computing device 120₁, ML model update engine 128_{N} of the computing device 120_{N}, and so on for each of the other computing devices of the population) may update the primary weights for the primary version of the global ML model at the computing devices and based on the corresponding gradients (*e.g*., using stochastic gradient descent or another technique), thereby resulting in an updated primary weights for the global ML model. In these implementations, the updated primary weights for the global ML model or differences between the primary weights (*e.g*., pre-update) and the updated primary weights (*e.g*., post-update) may correspond to the corresponding updates that are transmitted from each of the computing devices of the population and back to the remote system 160.

For the sake of example in FIG. 1, assume that the corresponding update is received from the computing device 120₁ during the given round of decentralized learning, but that the corresponding update is received from the computing device 120_{N} subsequent to the given round of decentralized learning. In this example, the computing device 120₁ may be referred to as a "fast computing device" (*e.g*., hence the designation "fast computing device 120₁" as shown in FIG. 1) and the corresponding update receive may be considered a "fast computing device update 120C₁". Further, in this example, the computing device 120_{N} may be referred to as a "straggler computing device" (*e.g*., hence the designation "straggler computing device 120_{N}" as shown in FIG. 1) and the corresponding update receive may be considered a "straggler computing device update 120C_{N}". Notably, none of the computing devices of the population are designated as "fast" or "straggler" prior to the given round of decentralized learning being initiated. Rather, these designations are a function of whether the respective computing devices transmit the corresponding updates back to the remote system 160 during the given round of decentralized learning due to computing device considerations and/or network considerations. Accordingly, a given computing device that participates in multiple rounds of decentralized learning may be a fast computing device in some rounds of decentralized learning, but a straggler computing device in other rounds of decentralized learning.

In various implementations, global ML model update engine 170 may cause the primary version of the update global ML model to be updated based on the fast computing device update 120C₁ and other fast computing device updates received from other fast computing devices of the population, thereby generating updated primary weights for an updated primary version of the global ML model. In some versions of those implementations, the global ML model update engine 170 may cause the primary version of the update global ML model to be continuously updated based on the fast computing device update 120C₁ and the other fast computing device updates as they are received. In additional or alternative implementations, the fast computing device update 120C₁ and the other fast computing device updates may be stored in one or more databases (e.g., the update(s) database 160A) as they are received, and then utilize one or more techniques to cause the primary version of the update global ML model to be updated based on the fast computing device update 120C₁ and the other fast computing device updates (*e.g*., using a federated averaging technique or another technique). In these implementations, the global ML model update engine 170 may cause the primary version of the update global ML model to be updated based on the fast computing device update 120C₁ and the other fast computing device updates in response to determining one or more conditions are satisfied (*e.g*., whether a threshold quantity of fast computing device updates have been received, whether a threshold duration of time has lapsed since the given round of decentralized learning was initiated, etc.).

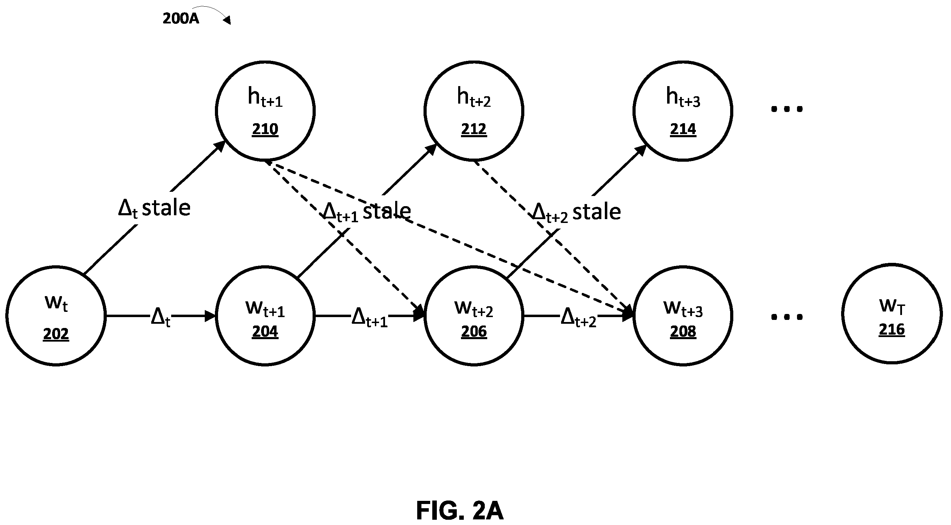

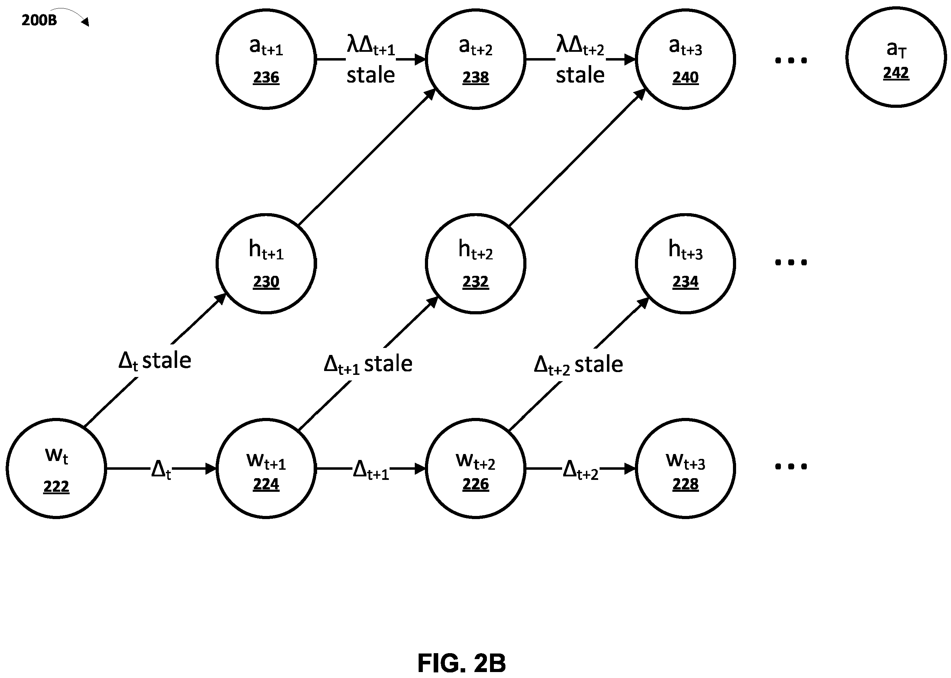

In various implementations, the decentralized learning engine 162 may cause a given additional round of decentralized learning for further updating of the global ML model to be initiated in the same or similar as described above, but with respect to the updated primary weights for the updated primary version of the global ML model and with respect to an additional population of additional client devices. Accordingly, when the straggler computing device update 120C_{N} is received from the straggler computing device 120_{N}, the remote system may have already advanced to the given additional round of decentralized learning for further updating of the global ML model. Nonetheless, the remote system 160 may still employ various techniques to utilize the straggler computing device update 120C_{N} in further updating of the global ML model. In some implementations, and as described with respect to FIG. 2A, the remote system 160 may employ a technique referred to herein as "Federated Asynchronous Regularization with Distillation Using Stale Teachers" (FARe-DUST) that utilizes historical global ML model engine 166. In additional or alternative implementations, and as described with respect to FIG. 2B, the remote system 160 may employ a technique referred to herein as "Federated Asynchronous Straggler Training on Mismatched and Stale Gradients" (FeAST on MSG) that utilizes the historical global ML model engine 166 and auxiliary global ML model engine 168.

Turning now to FIGS. 2A and 2B, various example techniques for utilizing stale update(s) received from straggler computing device(s) to improve decentralized learning of machine learning (ML) model(s) are depicted. For instance, FIG. 2A depicts a nodal view 200A of the technique referred to herein as FARe-DUST, and FIG. 2B depicts a nodal view 200B of the technique referred to herein as FeAST on MSG. In various implementations, a developer or other user that is associated with a remote system (*e.g.*, the remote system 160 of FIG. 1) may provide an indication of whether to implement the FARe-DUST, the FeAST on MSG technique, or some combination of both techniques during one or more rounds of decentralized learning for updating of a global ML model. In various implementations, the developer or other user that is associated with the remote system may provide an indication of a type of a population of computing devices to be utilized in implementing the FARe-DUST, the FeAST on MSG technique, or some combination of both techniques. For example, the population of computing devices may include one or more client devices of respective users (*e.g*., client device 310 of FIG. 3) such that the corresponding updates may be generated in a manner that leverages a federated learning framework. Additionally, or alternatively, the population of computing devices may include one or more remote servers that are in addition to the remote system (*e.g*., other remote servers or clusters of remote servers that are in addition to the remote system 160 of FIG. 1).

Referring specifically to FIG. 2A, assume that node 202 represents primary weights wₜ for a primary version of a global ML model that is to be updated through multiple rounds of decentralized learning for updating of the global ML model. Further assume that a remote system (*e.g*., the remote system 160 from FIG. 1) initiates a given round of decentralized learning for updating of the global ML model by transmitting the primary weights wt for the primary version of the global ML model to a population of computing devices to cause each of the computing devices to generate a corresponding update for the primary version of the global ML model and via utilization of the primary weights wt for the primary version of the global ML model at each of the computing devices (*e.g*., as described with respect to the computing device 120₁ and the computing device 120_{N} of FIG. 1). Further, the remote system may asynchronously receive the corresponding updates from one or more of the computing devices of the population during the given round of decentralized learning for updating of the global ML model (*e.g*., as represented by Δt). Notably, the one or more of the computing devices of the population that provide the corresponding updates during the given round of decentralized learning for updating of the global ML model may be referred to as fast computing devices (*e.g*., hence the designation "fast computing device 120₁" as shown in FIG. 1). Moreover, the remote system may cause the primary weights wt for the primary version of the global ML model to be updated based on the corresponding updates received from one or more of the computing devices of the population during the given round of decentralized learning for updating of the global ML model as indicating by node 204 representing updated primary weights wₜ₊₁ for an updated primary version of the global ML model.

Further assume that the remote system initiates a given additional round of decentralized learning for updating of the global ML model by transmitting the updated primary weights wₜ₊₁ for the updated primary version of the global ML model to an additional population of additional computing devices to cause each of the additional computing devices to generate an additional corresponding update for the updated primary version of the global ML model and via utilization of the updated primary weights wₜ₊₁ for the updated primary version of the global ML model at each of the additional computing devices (*e.g*., as described with respect to the computing device 120₁ and the computing device 120_{N} of FIG. 1). Further, the remote system may asynchronously receive the additional corresponding updates from one or more of the additional computing devices of the additional population during the given additional round of decentralized learning for updating of the global ML model (*e.g*., as represented by Δₜ₊₁). Notably, the one or more of the additional computing devices of the additional population that provide the corresponding updates during the given additional round of decentralized learning for updating of the global ML model may also be referred to as fast computing devices (*e.g*., hence the designation "fast computing device 120₁" as shown in FIG. 1). Moreover, the remote system may cause the updated primary weights wₜ₊₁ for the updated primary version of the global ML model to be further updated based on the additional corresponding updates received from one or more of the additional computing devices of the additional population during the given additional round of decentralized learning for further updating of the global ML model as indicated by node 206 representing further updated primary weights wₜ₊₂ for a further updated primary version of the global ML model. The remote system may continue advancing the primary version of the global ML model (*e.g*., as indicated by node 208 representing yet further updated primary weights wₜ₊₃ for a yet further updated primary version of the global ML model and the ellipses following node 208).

However, further assume that, during the given additional round of decentralized learning for updating of the global ML model, the remote system asynchronously receives the corresponding updates from one or more of the other computing devices of the population from given round of decentralized learning for updating of the global ML model (*e.g*., as represented by Δt stale). Notably, the one or more of the other computing devices of the population that provide the corresponding updates subsequent to the given round of decentralized learning for updating of the global ML model may also be referred to as straggler computing devices (*e.g*., hence the designation "straggler computing device 120₁" as shown in FIG. 1). Also, these corresponding updates are received after the remote system has already advanced the primary version of the global ML model to the updated primary version of the global ML model. Accordingly, these corresponding updates were generated by one or more of the other computing devices of the population based on the primary version of the global ML model and simply updating the updated primary version of the global ML model would be ineffective (*e.g.*, due to weight mismatch between the primary version of the global ML model and the updated primary version of the global ML model).

Nonetheless, the remote system may generate a corresponding historical version of the global ML model based on the corresponding updates received from the one or more computing devices of the population during the given round of decentralized learning for updating of the global ML model (*e.g*., as represented by Δₜ) and based on the stale updates as they are received from the one or more other computing devices of the population subsequent to the given round of decentralized learning for updating of the global ML model (*e.g*., as represented by Δt stale). Further, multiple corresponding historical checkpoints may be generated during a given round of decentralized learning for updating of the global ML model since the stale updates are received asynchronously. Put another way, Δt stale may include all of the corresponding updates that were utilized to generate the updated primary weights of the updated primary version of the global ML model during the given round of decentralized learning and at a given corresponding update received subsequent to the given round of decentralized learning, and the stale updates received from the straggler computing devices may be incorporated into Δt stale as they are asynchronously received from the straggler computing devices. Accordingly, Δt stale may represent not only corresponding updates from the fast computing devices of the population, but also one or more stale updates from one or more straggler computing devices of the population.

This enables the remote system (*e.g*., via the historical global ML model engine 166 of the remote system 160 of FIG. 1) to generate the corresponding historical version of the global ML model by causing the primary weights wt for the primary version of the global ML model to be updated based on the corresponding updates represented by Δt stale and subsequent to the given round of decentralized learning for updating of the global ML model as indicating by node 210 representing corresponding historical weights hₜ₊₁ for the corresponding historical version of the global ML model. The remote system may continue generating and/or updating corresponding historical versions of the global ML model (*e.g*., as indicated by node 212 representing an additional corresponding historical version of the global ML model that is generated based on the updated primary version of the global ML model and the stale updates (*e.g*., Δₜ₊₁ stale) from the given additional round of decentralized learning, node 214 representing a further additional corresponding historical version of the global ML model that is generated based on the further updated primary version of the global ML model and the stale updates (*e.g*., Δₜ₊₂ stale) from a given further additional round of decentralized learning, and the ellipses following node 214).

Accordingly, in subsequent rounds of decentralized learning (*e.g*., that are subsequent to at least the corresponding historical version of the global ML model being generated), the remote system may transmit additional data (*e.g*., that is in addition to current primary weights for a current primary version of the global ML model) to each of the computing devices of the corresponding populations. In some implementations, the remote system may transmit (1) the current primary weights for the current primary version of the global ML model, and (2) one of the corresponding historical versions of the global ML model to each of the computing devices of the population (*e.g*., as indicated by the dashed lines in FIG. 2A). In these implementations, the corresponding historical version of the global ML model may be utilized as a corresponding teacher model to generate one or more labels (*e.g*., as described with respect to the teacher-student approach with respect to FIG. 1). Put another way, in these implementations, the corresponding historical version of the global ML model may be utilized as the corresponding teacher model to distill knowledge from the corresponding historical version of the global ML model into the corresponding update, thereby incorporating knowledge from the straggler computing devices into the primary model in a computationally efficient manner that is effective for further updating of the current primary version of the primary model. The one or more labels may be utilized to derive a distillation regularization term that may influence the corresponding update that is provided to the remote system for further updating of the current primary version of the primary model.

Notably, in some versions of those implementations, and as multiple corresponding historical versions of the global ML model are accumulated through multiple rounds of decentralized learning for updating of the global ML model, the corresponding historical versions of the global ML model that are transmitted to each of the computing devices of the population may be uniformly and randomly selected from among the multiple corresponding historical versions of the global ML model. Put another way, the computing devices of a corresponding population may utilize different corresponding historical versions of the global ML model in generating the corresponding updates. In other versions of those implementations, the computing devices of the corresponding population may utilize the same corresponding historical version of the global ML model in generating the corresponding updates. Also, notably, in some versions of those implementations, and as multiple corresponding historical versions of the global ML model are accumulated through multiple rounds of decentralized learning for updating of the global ML model, older corresponding historical versions of the global ML model may be discarded or purged from storage of the remote system, such that N corresponding historical versions of the given ML model are maintained at any given time (*e.g*., where *N* is a positive integer greater than 1).

Accordingly, and subsequent to the decentralized learning for updating of the global ML model, a most recently updated primary version of the global ML model may be deployed as a final version of the global ML model that has final weights w_{T} as indicated at node 216. In various implementations, the most recently updated primary version of the global ML model may be deployed as the final version of the global ML model in response to determining one or more deployment criteria are satisfied. The one or more deployment criteria may include, for example, a threshold quantity of rounds of decentralized learning for updating of the global ML model being performed, a threshold performance measure of the most recently updated primary version of the global ML model being achieved, and/or other criteria. Otherwise, the remote system may continue with additional rounds of decentralized learning for updating of the global ML model.

Referring specifically to FIG. 2B, similarly assume that node 222 represents primary weights wt for a primary version of a global ML model that is to be updated through multiple rounds of decentralized learning for updating of the global ML model. Further assume that a remote system (*e.g*., the remote system 160 from FIG. 1) initiates a given round of decentralized learning for updating of the global ML model by transmitting the primary weights wₜ for the primary version of the global ML model to a population of computing devices to cause each of the computing devices to generate a corresponding update for the primary version of the global ML model and via utilization of the primary weights wₜ for the primary version of the global ML model at each of the computing devices (*e.g*., as described with respect to the computing device 120₁ and the computing device 120_{N} of FIG. 1). Further, the remote system may asynchronously receive the corresponding updates from one or more of the computing devices of the population during the given round of decentralized learning for updating of the global ML model (*e.g*., again as represented by Δₜ). Notably, the one or more of the computing devices of the population that provide the corresponding updates during the given round of decentralized learning for updating of the global ML model may be referred to as fast computing devices (*e.g*., hence the designation "fast computing device 120₁" as shown in FIG. 1). Moreover, the remote system may cause the primary weights wt for the primary version of the global ML model to be updated based on the corresponding updates received from one or more of the computing devices of the population during the given round of decentralized learning for updating of the global ML model as indicating by node 224 representing updated primary weights wₜ₊₁ for an updated primary version of the global ML model.

Further assume that the remote system initiates a given additional round of decentralized learning for updating of the global ML model by transmitting the updated primary weights wₜ₊₁ for the updated primary version of the global ML model to an additional population of additional computing devices to cause each of the additional computing devices to generate an additional corresponding update for the updated primary version of the global ML model and via utilization of the updated primary weights wₜ₊₁ for the updated primary version of the global ML model at each of the additional computing devices (*e.g*., as described with respect to the computing device 120₁ and the computing device 120_{N} of FIG. 1). Further, the remote system may asynchronously receive the additional corresponding updates from one or more of the additional computing devices of the additional population during the given additional round of decentralized learning for updating of the global ML model (*e.g*., again as represented by Δₜ₊₁). Notably, the one or more of the additional computing devices of the additional population that provide the corresponding updates during the given additional round of decentralized learning for updating of the global ML model may also be referred to as fast computing devices (*e.g*., hence the designation "fast computing device 120₁" as shown in FIG. 1). Moreover, the remote system may cause the updated primary weights wₜ₊₁ for the updated primary version of the global ML model to be further updated based on the additional corresponding updates received from one or more of the additional computing devices of the additional population during the given additional round of decentralized learning for further updating of the global ML model as indicated by node 226 representing further updated primary weights wₜ₊₂ for a further updated primary version of the global ML model. The remote system may continue advancing the primary version of the global ML model (*e.g*., as indicated by node 228 representing yet further updated primary weights wₜ₊₃ for a yet further updated primary version of the global ML model and the ellipses following node 228).

However, further assume that, during the given additional round of decentralized learning for updating of the global ML model, the remote system asynchronously receives the corresponding updates from one or more of the other computing devices of the population from given round of decentralized learning for updating of the global ML model (e.g., again as represented by Δt stale). Notably, the one or more of the other computing devices of the population that provide the corresponding updates subsequent to the given round of decentralized learning for updating of the global ML model may also be referred to as straggler computing devices (*e.g*., hence the designation "straggler computing device 120₁" as shown in FIG. 1). Also, these corresponding updates are received after the remote system has already advanced the primary version of the global ML model to the updated primary version of the global ML model. Accordingly, these corresponding updates were generated by one or more of the other computing devices of the population based on the primary version of the global ML model and simply updating the updated primary version of the global ML model would be ineffective (*e.g*., due to weight mismatch between the primary version of the global ML model and the updated primary version of the global ML model).

Nonetheless, the remote system may generate a corresponding historical version of the global ML model based on the corresponding updates received from the one or more computing devices of the population during the given round of decentralized learning for updating of the global ML model (*e.g.*, again as represented by Δt) and based on the corresponding updates received from the one or more other computing devices of the population subsequent to the given round of decentralized learning for updating of the global ML model (*e.g*., again as represented by Δt stale). Put another way, Δt stale may include all of the corresponding updates that were utilized to generate the updated primary weights of the updated primary version of the global ML model during the given round of decentralized learning and at a given corresponding update received subsequent to the given round of decentralized learning. Accordingly, Δt stale may represent not only corresponding updates from the fast computing devices of the population, but also corresponding updates from one or more straggler computing devices of the population. This enables the remote system (*e.g*., via the historical global ML model engine 166 of the remote system 160 of FIG. 1) to generate the corresponding historical version of the global ML model by causing the primary weights wt for the primary version of the global ML model to be updated based on the corresponding updates represented by Δt stale and subsequent to the given round of decentralized learning for updating of the global ML model as indicating by node 230 representing corresponding historical weights hₜ₊₁ for the corresponding historical version of the global ML model.

In contrast with the FARe-DUST technique described with respect to FIG. 2A where the remote system may generate and/or update the corresponding historical versions of the global ML model as the stale updates are asynchronously received by the remote system, the remote system in the FeAST on MSG technique described with respect to FIG. 2B may wait for one or more termination criteria to be satisfied prior to generating the corresponding historical versions of the global ML model. The one or more termination criteria may include, for example, a threshold quantity of the stale updates being received from the straggler computing devices, a threshold duration of time lapsing subsequent to conclusion of the given round of decentralized learning for updating of the global ML model, and/or other termination criteria. Put another way, each of the primary versions of the global ML model may be associated with a corresponding historical version of the global ML model that is generated based on the stale updates received from the straggler computing devices during the subsequent round of decentralized learning. The remote system may continue generating the corresponding historical versions of the global ML model (*e.g.*, as indicated by node 232 representing an additional corresponding historical version of the global ML model that is generated based on the updated primary version of the global ML model and the stale updates (*e.g*., Δₜ₊₁ stale) from the given additional round of decentralized learning, node 234 representing a further additional corresponding historical version of the global ML model that is generated based on the further updated primary version of the global ML model and the stale updates (*e.g*., Δₜ₊₂ stale) from a given further additional round of decentralized learning, and the ellipses following node 234).

Further, and in contrast with the FARe-DUST technique described with respect to FIG. 2A where the remote utilizes the corresponding historical versions of the global ML model for distillation, the remote system in the FeAST on MSG technique described with respect to FIG. 2B may utilize the corresponding historical versions of the global ML model to generate corresponding auxiliary versions of the global ML model (*e.g*., via the auxiliary global ML model engine 168 of the remote system 160 of FIG. 1). For example, the remote system may generate the corresponding auxiliary versions of the global ML model as weighted combinations of the corresponding historical versions of the global ML model and the corresponding primary versions of the global ML model. These auxiliary versions of the global ML model may be, for example, various exponential moving averages of the corresponding historical versions of the global ML model and the corresponding primary versions of the global ML model.

For instance, the remote system (*e.g*., via the auxiliary global ML model engine 168 of the remote system 160 of FIG. 1) may generate the corresponding auxiliary models at step(*t* - *K +1*) as a function of a_{t-K +1} = β (a_{t-K} - λ Δ_{t-K} stale) + (1 - β) h_{t-K +1}. In this instance, *t* is a positive integer corresponding to the given round of decentralized learning, *t-K* is a positive integer corresponding to a prior round of decentralized learning that is prior to the given round of decentralized learning, β is a tuneable scaling factor (*e.g*., tuneable between 0 and 1, or another range of values) that controls a trade-off between a most recent corresponding historical version of the global ML model and the corresponding auxiliary version of the global ML model, and λ is a tuneable gradient mismatch factor (*e.g*., tuneable between 0 and 1, or another range of values) that controls the influence of mismatched gradients between the most recent corresponding historical version of the global ML model and the corresponding auxiliary version of the global ML model. In implementations where λ is zero, the corresponding auxiliary versions model will be an exponential moving average of the corresponding historical versions of the global ML model. Further, in implementations where λ is one, the corresponding auxiliary versions model will be an average of the most recent corresponding historical version of the global ML model and a most recent corresponding auxiliary version of the global ML model that incorporates the stale updates from the prior round of decentralized learning.

Accordingly, in the example of FIG. 2B, node 236 represents auxiliary weights aₜ₊₁ for an initial auxiliary version of the global ML model. In this instance, and since there is no prior auxiliary version of the global ML model, the remote system (*e.g*., via the auxiliary global ML model engine 168 of the remote system 160 of FIG. 1) may generate the auxiliary weights aₜ₊₁ for the initial auxiliary version of the global ML model as a weighted version of the corresponding historical version of the global ML model at hₜ₊₁. However, in the example of FIG. 2B, and in generating an updated auxiliary version of the global ML model represented by auxiliary weights aₜ₊₂ at node 238 and a further updated auxiliary version of the global ML model represented by auxiliary weights aₜ₊₃ at node 240, the remote system may generate these updated auxiliary versions of the global ML model based on the corresponding historical version of the global ML model and the corresponding prior auxiliary version of the global ML model.

Notably, in various implementations, and as multiple corresponding historical versions of the global ML model are accumulated through multiple rounds of decentralized learning for updating of the global ML model, the corresponding historical versions of the global ML model may be discarded or purged from storage of the remote system since the corresponding historical versions of the global ML model are incorporated into the corresponding auxiliary versions of the global ML model.

Accordingly, and subsequent to the decentralized learning for updating of the global ML model, a most recently updated auxiliary version of the global ML model may be deployed as a final version of the global ML model that has final weights a_{T} as indicated at node 242. In various implementations, the most recently updated auxiliary version of the global ML may be deployed as the final version of the global ML model in response to determining the one or more deployment criteria are satisfied (*e.g*., as described with respect to FIG. 2A). By generating the most recently updated auxiliary version of the global ML model in this manner, the remote system ensures that the auxiliary versions of the global ML model does not drift too far from the corresponding primary versions of the global ML model, but that the corresponding auxiliary versions of the global ML model progressively incorporate the stale updates received from the straggler computing devices.

Although FIGS. 2A and 2B are described with respect to generating and/or updating particular corresponding historical models based on the stale updates being asynchronously received during particular rounds of decentralized learning, it should be understood that is for the sake of example to illustrate techniques contemplated herein and is not meant to be limiting. Rather, it should be understood that the stale updates may be received during any subsequent round of decentralized learning and are dependent on the computing devices of the population.

Further, although FIGS. 2A and 2B are described with respect to different versions of the corresponding ML models being stored in storage of the remote system, it should be understood that is for the sake of brevity and is not meant to be limiting. For example, in storing a given version of the global ML model (*e.g*., any of the primary versions, the historical versions, and/or the auxiliary versions), the corresponding weights of these global ML models may be stored in the storage of the remote system, optimization states for these global ML models may be stored in the storage of the remote system, and/or other parameters (*e.g*., momenta parameters) for these global ML models may be stored in the storage of the remote system.

Turning now to FIG. 3, a block diagram that demonstrates various aspects of the present is depicted. The block diagram of FIG. 3 includes a client device 310 having various on-device machine learning (ML) engines, that utilize various ML models that may be trained in the manner described herein, and that are included as part of (or in communication with) an automated assistant client 315. Other components of the client device 310 are not illustrated in FIG. 3 for simplicity. FIG. 3 illustrates one example of how the various on-device ML engines of and the respective ML models may be utilized by the automated assistant client 315 in performing various actions.

The client device 310 in FIG. 3 is illustrated with one or more microphones 311 for generating audio data, one or more speakers 312 for rendering audio data, one or more vision components 313 for generating vision data, and display(s) 314 (*e.g*., a touch-sensitive display) for rendering visual data and/or for receiving various touch and/or typed inputs. The client device 310 may further include pressure sensor(s), proximity sensor(s), accelerometer(s), magnetometer(s), and/or other sensor(s) that are used to generate other sensor data. The client device 310 at least selectively executes the automated assistant client 315. The automated assistant client 315 includes, in the example of FIG. 3, hotword detection engine 322, hotword free invocation engine 324, continued conversation engine 326, ASR engine 328, object detection engine 330, object classification engine 332, voice identification engine 334, and face identification engine 336. The automated assistant client 315 further includes speech capture engine 316 and visual capture engine 318. It should be understood that the ML engines and ML models depicted in FIG. 3 are provided for the sake of example to illustrate various ML models that may be trained in the manner described herein, and are not meant to be limiting. For example, the automated assistant client 315 can further include additional and/or alternative engines, such as a text-to-speech (TTS) engine and a respective TTS model, a voice activity detection (VAD) engine and a respective VAD model, an endpoint detector engine and a respective endpoint detector model, a lip movement engine and a respective lip movement model, and/or other engine(s) along with respective ML model(s). Moreover, it should be understood that one or more of the engines and/or models described herein can be combined, such that a single engine and/or model can perform the functions of multiple engines and/or models described herein.

One or more cloud-based automated assistant components 370 can optionally be implemented on one or more computing systems (collectively referred to as a "cloud" computing system) that are communicatively coupled to client device 310 via one or more networks as indicated generally by 399. The cloud-based automated assistant components 370 can be implemented, for example, via a high-performance remote server cluster of high-performance remote servers. In various implementations, an instance of the automated assistant client 315, by way of its interactions with one or more of the cloud-based automated assistant components 370, may form what appears to be, from a user's perspective, a logical instance of an automated assistant as indicated generally by 395 with which the user may engage in a human-to-computer interactions (*e.g*., spoken interactions, gesture-based interactions, typed-based interactions, and/or touch-based interactions). The one or more cloud-based automated assistant components 370 include, in the example of FIG. 3, cloud-based counterparts of the ML engines of the client device 310 described above, such as hotword detection engine 372, hotword free invocation engine 374, continued conversation engine 376, ASR engine 378, object detection engine 380, object classification engine 382, voice identification engine 384, and face identification engine 386. Again, it should be understood that the ML engines and ML models depicted in FIG. 3 are provided for the sake of example to illustrate various ML models that may be trained in the manner described herein, and are not meant to be limiting.

The client device 310 can be, for example: a desktop computing device, a laptop computing device, a tablet computing device, a mobile phone computing device, a computing device of a vehicle of the user (*e.g*., an in-vehicle communications system, an in-vehicle entertainment system, an in-vehicle navigation system), a standalone interactive speaker, a smart appliance such as a smart television (or a standard television equipped with a networked dongle with automated assistant capabilities), and/or a wearable apparatus of the user that includes a computing device (*e.g*., a watch of the user having a computing device, glasses of the user having a computing device, a virtual or augmented reality computing device). Additional and/or alternative client devices may be provided. Notably, the client device 310 may be personal to a given user (*e.g*., a given user of a mobile device) or shared amongst a plurality of users (*e.g*., a household of users, an office of users, or the like). In various implementations, the client device 310 may be an instance of a computing device that may be utilized in a given round of decentralized learning for updating of a given global ML model (*e.g*., an instance of the fast computing device 120₁ from FIG. 1 or an instance of the slow computing device 120_{N} from FIG. 1). However, it should be understood that a population of client devices utilized in a given round of decentralized learning for updating of a given global ML model is not limited to client devices of respective users and may additionally, or alternatively, include other remote systems (*e.g*., other remote server(s) that are in addition the remote system 160 of FIG. 1).

The one or more vision components 313 can take various forms, such as monographic cameras, stereographic cameras, a LIDAR component (or other laser-based component(s)), a radar component, etc. The one or more vision components 313 may be used, *e.g.,* by the visual capture engine 318, to capture vision data corresponding to vision frames (*e.g*., image frames, video frames, laser-based vision frames, etc.) of an environment in which the client device 310 is deployed. In some implementations, such vision frames can be utilized to determine whether a user is present near the client device 310 and/or a distance of a given user of the client device 310 relative to the client device 310. Such determination of user presence can be utilized, for example, in determining whether to activate one or more of the various on-device ML engines depicted in FIG. 3, and/or other engine(s). Further, the speech capture engine 316 can be configured to capture a user's spoken utterance(s) and/or other audio data captured via the one or more of the microphones 311, and optionally in response to receiving a particular input to invoke the automated assistant 395 (*e.g*., via actuation of a hardware or software button of the client device 310, via a particular word or phrase, via a particular gesture, etc.).

As described herein, such audio data, vision data, textual data, and/or any other data generated locally at the client device 310 (collectively referred to herein as "client data") can be processed by the various engines depicted in FIG. 3 to generate predicted output at the client device 310 using corresponding ML models and/or at one or more of the cloud-based automated assistant components 370 using corresponding ML models. Notably, the predicted output generated using the corresponding ML models may vary based on the client data (*e.g*., whether the client data is audio data, vision data, textual data, and/or other data) and/or the corresponding ML models utilized in processing the client data.

As some non-limiting example, the respective hotword detection engines 322, 372 can utilize respective hotword detection models 322A, 372A to predict whether audio data includes one or more particular words or phrases to invoke the automated assistant 395 (e.g., "Ok Assistant", "Hey Assistant", "What is the weather Assistant?", etc.) or certain functions of the automated assistant 395 (*e.g*., "Stop" to stop an alarm sounding or music playing or the like); the respective hotword free invocation engines 324, 374 can utilize respective hotword free invocation models 324A, 374A to predict whether non-audio data (*e.g.*, vision data) includes a physical motion gesture or other signal to invoke the automated assistant 395 (*e.g*., based on a gaze of the user and optionally further based on mouth movement of the user); the respective continued conversation engines 326, 376 can utilize respective continued conversation models 326A, 376A to predict whether further audio data is directed to the automated assistant 395 (*e.g*., or directed to an additional user in the environment of the client device 310); the respective ASR engines 328, 378 can utilize respective ASR models 328A, 378A to generate recognized text in one or more languages, or predict phoneme(s) and/or token(s) that correspond to audio data detected at the client device 310 and generate the recognized text in the one or more languages based on the phoneme(s) and/or token(s); the respective object detection engines 330, 380 can utilize respective object detection models 330A, 380A to predict object location(s) included in vision data captured at the client device 310; the respective object classification engines 332, 382 can utilize respective object classification models 332A, 382A to predict object classification(s) of object(s) included in vision data captured at the client device 310; the respective voice identification engines 334, 384 can utilize respective voice identification models 334A, 384A to predict whether audio data captures a spoken utterance of one or more known users of the client device 310 (*e.g.,* by generating a speaker embedding, or other representation, that can be compared to a corresponding actual embedding for the one or more known users of the client device 310); and the respective face identification engines 336, 386 can utilize respective face identification models 336A, 386A to predict whether vision data captures one or more known users of the client device 310 in an environment of the client device 310 (*e.g*., by generating a face embedding, or other representation, that can be compared to a corresponding face embedding for the one or more known users of the client device 310).

In some implementations, the client device 310 and one or more of the cloud-based automated assistant components 370 may further include natural language understanding (NLU) engines 338, 388 and fulfillment engines 340, 390, respectively. The NLU engines 338, 388 may perform natural language understanding and/or natural language processing utilizing respective NLU models 338A, 388A, on recognized text, predicted phoneme(s), and/or predicted token(s) generated by the ASR engines 328, 378 to generate NLU data. The NLU data can include, for example, intent(s) for a spoken utterance captured in audio data, and optionally slot value(s) for parameter(s) for the intent(s). Further, the fulfillment engines 340, 390 can generate fulfillment data utilizing respective fulfillment models or rules 340A, 390A, and based on processing the NLU data. The fulfillment data can, for example, define certain fulfillment that is responsive to user input (*e.g*., spoken utterances, typed input, touch input, gesture input, and/or any other user input) provided by a user of the client device 310. The certain fulfillment can include causing the automated assistant 395 to interact with software application(s) accessible at the client device 310, causing the automated assistant 395 to transmit command(s) to Internet-of-things (IoT) device(s) (directly or via corresponding remote system(s)) based on the user input, and/or other resolution action(s) to be performed based on processing the user input. The fulfillment data is then provided for local and/or remote performance/execution of the determined action(s) to cause the certain fulfillment to be performed.

In other implementations, the NLU engines 338, 388 and the fulfillment engines 340, 390 may be omitted, and the ASR engines 328, 378 can generate the fulfillment data directly based on the user input. For example, assume one or more of the ASR engines 328, 378 processes, using one or more of the respective ASR models 328A, 378A, a spoken utterance of "turn on the lights." In this example, one or more of the ASR engines 328, 378 can generate a semantic output that is then transmitted to a software application associated with the lights and/or directly to the lights that indicates that they should be turned on without actively using one or more of the NLU engines 338, 388 and/or one or more of the fulfillment engines 340, 390 in processing the spoken utterance.

Notably, the one or more cloud-based automated assistant components 370 include cloud-based counterparts to the engines and models described herein with respect to the client device 310 of FIG. 3. However, in some implementations, these engines and models of the one or more cloud-based automated assistant components 370 may not be utilized since these engines and models may be transmitted directly to the client device 310 and executed locally at the client device 310. In other implementations, these engines and models may be utilized exclusively when the client device 310 detects any user input and transmits the user input to the one or more cloud-based automated assistant components 370. In various implementations, these engines and models executed at the client device 310 and the one or more cloud-based automated assistant components 370 may be utilized in conjunction with one another in a distributed manner. In these implementations, a remote execution module can optionally be included to perform remote execution using one or more of these engines and models based on local or remotely generated NLU data and/or fulfillment data. Additional and/or alternative remote engines can be included.

As described herein, in various implementations on-device speech processing, on-device image processing, on-device NLU, on-device fulfillment, and/or on-device execution can be prioritized at least due to the latency and/or network usage reductions they provide when resolving a spoken utterance (due to no client-server roundtrip(s) being needed to resolve the spoken utterance). However, one or more of the cloud-based automated assistant components 370 can be utilized at least selectively. For example, such component(s) can be utilized in parallel with on-device component(s) and output from such component(s) utilized when local component(s) fail. For example, if any of the on-device engines and/or models fail (*e.g*., due to relatively limited resources of client device 310), then the more robust resources of the cloud may be utilized.

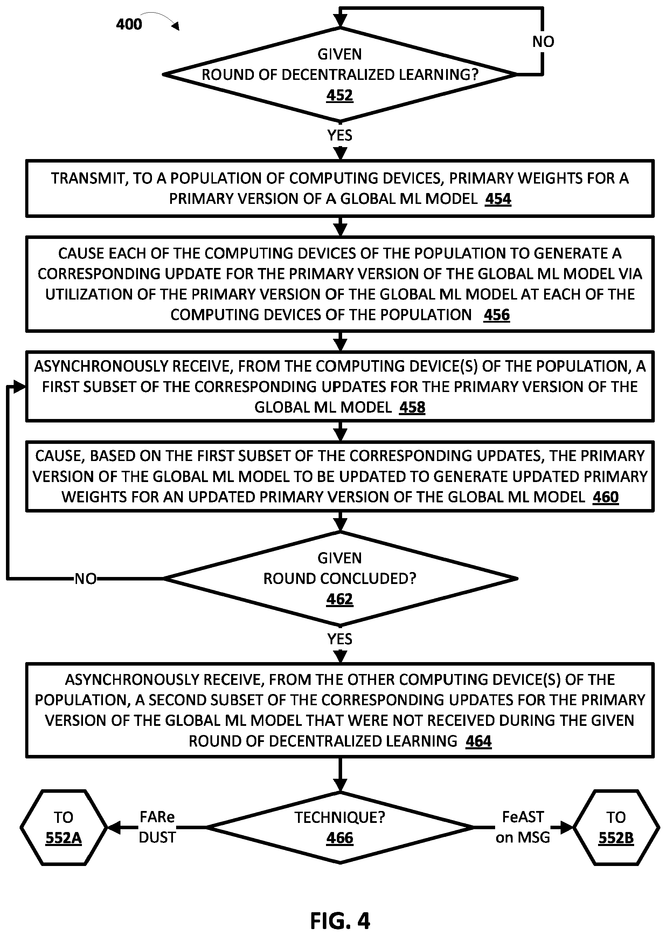

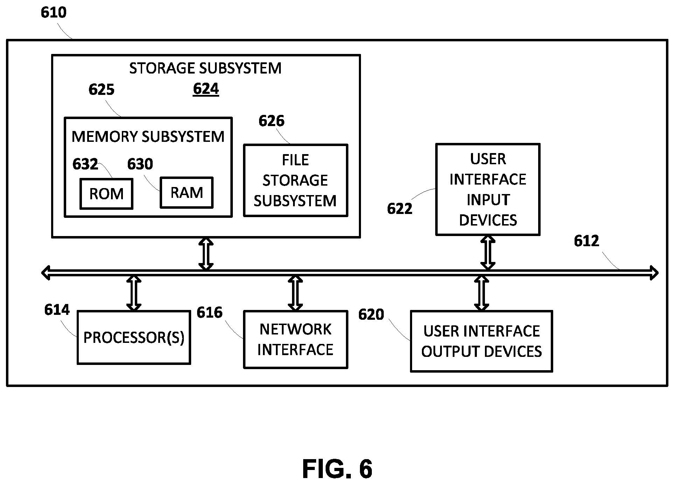

Turning now to FIG. 4, a flowchart illustrating an example method 400 of causing a primary version of a global machine learning (ML) model to be updated during a given round of decentralized learning of the global machine learning model, but receiving stale update(s) from straggler computing device(s) subsequent to the given round of decentralized learning of the global ML model is depicted. For convenience, the operations of the method 400 are described with reference to a system that performs the operations. The system of method 400 includes one or more processors and/or other component(s) of a computing device (*e.g*., the remote system 160 of FIG. 1, the cloud-based automated assistant component(s) 370 of FIG. 3, computing device 610 of FIG. 6, one or more high performance servers, and/or other computing devices). Moreover, while operations of the method 400 are shown in a particular order, this is not meant to be limiting. One or more operations may be reordered, omitted, or added.

At block 452, the system determines whether a given round of decentralized learning for updating of a global ML model has been initiated. If, at an iteration of block 452, the system determines that a given round of decentralized learning for updating of a global ML model has not been initiated, then the system may continue monitoring for the given round of decentralized learning for updating of the global ML model to be initiated at block 452. If, at an iteration of block 452, the system determines that a given round of decentralized learning for updating of a global ML model has been initiated, then the system may proceed to block 454.

At block 454, the system transmits, to a population of computing devices, primary weights for a primary version of a global ML model (*e.g*., as described with respect to the decentralized learning engine 162, the computing device identification engine 164, and the ML model distribution engine 172 of FIG. 1). At block 456, the system causes each of the computing devices of the population to generate a corresponding update for the primary version of the global ML model via utilization of the primary version of the global ML model at each of the computing devices of the population (*e.g*., as described with respect to the computing device 120₁ and the computing device 120_{N} of FIG. 1). At block 458, the system asynchronously receives, from one or more of the computing devices of the population, a first subset of corresponding updates for the primary version of the global ML model (*e.g*., as described with respect to the fast computing device update 120C₁ of FIG. 1). At block 460, the system causes, based on the first subset of the corresponding updates, the primary version of the global ML model to be updated to generate updated primary weights for an updated primary version of the global ML model (*e.g*., as described with respect to the global ML model update engine 170 of FIG. 1).

At block 462, the system determines whether the given round of decentralized learning for updating of the global ML model has concluded. The system may determine whether the given round of decentralized learning has concluded based on a threshold quantity of corresponding updates being received from the computing devices of the population, based on a threshold duration of time lapsing since the given round of decentralized learning was initiated, and/or other criteria. If, at an iteration of block 462, the system determines that the given round of decentralized learning for updating of the global ML model has not concluded, then the system may return to block 458 to continue asynchronously receiving, from one or more of the computing devices, the first subset of corresponding updates for the primary version of the global ML model. If, at an iteration of block 462, the system determines that the given round of decentralized learning for updating of a global ML model has concluded, then the system may proceed to block 464.

In various implementations, the system may wait for the given round of decentralized learning for updating of the global ML model to conclude prior to causing the primary version of the global ML model to be updated to generate the updated primary weights for the updated primary version of the global ML model. Further, and in response to determining that the given round of decentralized learning for updating of the global ML model has concluded, the system may automatically initiate a given additional round of decentralized learning for updating of the given ML model.

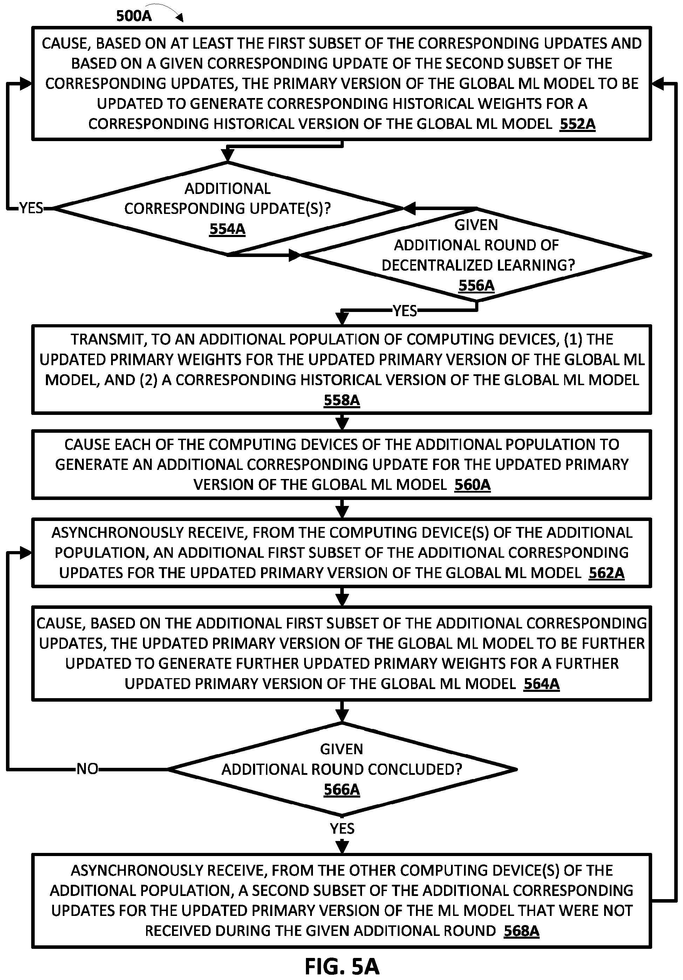

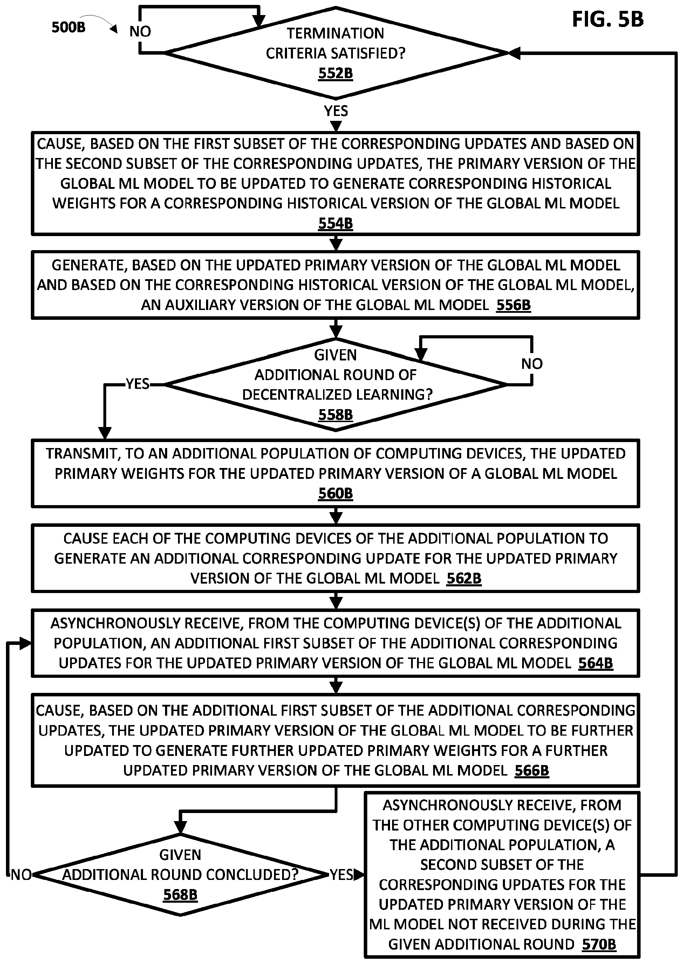

At block 464, the system asynchronously receives, from one or more of the other computing devices of the population, a second subset of the corresponding updates for the primary version of the global ML model that were not received during the given round of decentralized learning for updating of the global ML model. At block 466, the system determines which technique to implement for utilizing the second subset of the corresponding updates for the primary version of the global ML model that were not received during the given round of decentralized learning for updating of the global ML model. If, at an iteration of block 466, the system determines to implement a "Federated Asynchronous Regularization with Distillation Using Stale Teachers" (FARe-DUST) technique (*e.g*., as described with respect to FIG. 2A), then the system may proceed to block 552A of method 500A of FIG. 5A. The method 500A of FIG. 5A is described in more detail below. If, at an iteration of block 466, the system determines to implement a "Federated Asynchronous Straggler Training on Mismatched and Stale Gradients" (FeAST on MSG) technique (*e.g*., as described with respect to FIG. 2B), then the system may proceed to block 552B of method 500B of FIG. 5B. The method 500B of FIG. 5B is described in more detail below.

Turning now to FIG. 5A, a flowchart illustrating an example method 500A of utilizing stale update(s) received from straggler computing device(s) to improve decentralized learning of machine learning model(s) (*e.g*., "Federated Asynchronous Regularization with Distillation Using Stale Teachers" (FARe-DUST)) is depicted. For convenience, the operations of the method 500A are described with reference to a system that performs the operations. The system of method 500A includes one or more processors and/or other component(s) of a computing device (*e.g*., the remote system 160 of FIG. 1, the cloud-based automated assistant component(s) 370 of FIG. 3, computing device 610 of FIG. 6, one or more high performance servers, and/or other computing devices). Moreover, while operations of the method 500A are shown in a particular order, this is not meant to be limiting. One or more operations may be reordered, omitted, or added.

At block 552A, the system causes, based on at least the first subset of the corresponding updates and based on a given corresponding update of the second subset of the corresponding updates, the primary version of the global ML model to be updated to generate corresponding historical weights for a corresponding historical version of the global ML model (*e.g*., as described with respect to FIG. 2A). At block 554A, the system determines whether there are one or more additional corresponding updates for the primary version of the global ML model. If, at an iteration of block 554A, the system determines that there are one or more additional corresponding updates for the primary version of the global ML model, then the system may return to block 552A to generate additional corresponding historical weights for an additional corresponding historical version of the global ML model. Further, if, at an iteration of block 554A, the system determines that there are one or more additional corresponding updates for the primary version of the global ML model, then the system may also proceed to block 556A. However, if, at an iteration of block 554A, the system determines that there are not one or more additional corresponding updates for the primary version of the global ML model, then the system may still proceed to block 556A and without returning to block 552A until one or more additional corresponding updates are received.

At block 556A, the system determines whether a given additional round of decentralized learning for updating of the global ML model has been initiated. If, at an iteration of block 556A, the system determines that a given additional round of decentralized learning for updating of the global ML model has been initiated, then the system may proceed to block 558A. Further, if, at an iteration of block 554A, the system determines that a given additional round of decentralized learning for updating of the global ML model has been initiated, then the system may also proceed to block 558A. However, if, at an iteration of block 556A, the system determines that no given additional round of decentralized learning for updating of the global ML model has been initiated, then the system may return to block 554A and without returning to block 554A.

Put another way, and in using the FARe-DUST technique, the system may generate corresponding historical versions of the global ML model as straggler updates are received from straggler computing devices. Further, and in using the FARe-DUST technique, the system may update previously generated corresponding historical versions of the global ML model. Notably, the system may perform the operations of these blocks as background processes to ensure that the primary version of the global ML model advances, while also generating and/or updating the corresponding historical versions of the global ML model. As a result, there are no "NO" branches for blocks 554A and 556A since the operations of these blocks may be performed as background processes while the system proceeds with the method 500A of FIG. 5A.

At block 558A, the system transmits, to an additional population of additional computing devices (*e.g*., that are in addition to the computing devices of the population from block 454 of the method 400 of FIG. 4), (1) the updated primary weights for the updated primary version of the global ML model (*e.g*., from block 460 of the method 400 of FIG. 4), and (2) a corresponding historical version of the global ML model (*e.g*., from block 552A of the method 500A of FIG. 5A). In various implementations, and assuming that multiple corresponding historical versions of the global ML model are available, the system may randomly and uniformly select a given one of the multiple corresponding historical versions of the global ML model to send to a given one of the computing devices. Put another way, in these implementations, the system may cause a first corresponding historical version of the global ML model to be transmitted to a first computing device of the population, a second corresponding historical version of the global ML model to be transmitted to a second computing device of the population, and so on.

At block 560A, the system causes each of the additional computing devices of the additional population to generate an additional corresponding update for the updated primary version of the global ML model. Notably, the corresponding historical versions of the global ML models may be utilized as corresponding teacher models (*e.g*., according to a teacher-student approach as described with respect to the corresponding gradient engines and the corresponding learning engines of FIG. 1) at the respective computing devices to generate the additional corresponding updates.

At block 562A, the system asynchronously receives, from one or more of the additional computing devices of the additional population, an additional first subset of the additional corresponding updates for the updates primary version of the global ML model. At block 564A, the system causes, based on the additional first subset of the additional corresponding updates, the updated primary version of the global ML model to be further updated to generate further updated primary weights for a further updated primary version of the global ML model. Put another way, the system may continue to advance the primary version of the global ML model based on the corresponding updates that are received from the one or more additional computing devices of the population and during the given additional round of decentralized learning.

At block 566A, the system determines whether the given additional round of decentralized learning for updating of the global ML model has concluded. The system may determine whether the given round of decentralized learning has concluded based on a threshold quantity of corresponding updates being received from the computing devices of the population, based on a threshold duration of time lapsing since the given round of decentralized learning was initiated, and/or other criteria. If, at an iteration of block 566A, the system determines that the given additional round of decentralized learning for updating of the global ML model has not concluded, then the system may return to block 562A to continue asynchronously receiving, from one or more of the additional computing devices, the first subset of additional corresponding updates for the updated primary version of the global ML model. If, at an iteration of block 566A, the system determines that the given additional round of decentralized learning for updating of the global ML model has concluded, then the system may proceed to block 568A.

In various implementations, the system may wait for the given round of decentralized learning for updating of the global ML model to conclude prior to causing the primary version of the global ML model to be updated to generate the updated primary weights for the updated primary version of the global ML model. Further, and in response to determining that the given round of decentralized learning for updating of the global ML model has concluded, the system may automatically initiate a given additional round of decentralized learning for updating of the given ML model.

At block 568A, the system asynchronously receives, from one or more of the other additional computing devices of the additional population, a second subset of the additional corresponding updates for the updated primary version of the global ML model that were not received during the given additional round of decentralized learning for updating of the global ML model. The system may return to block 552A, and perform an additional iteration of the method 500A of FIG. 5A to continue generating and/or updating additional corresponding historical versions of the global ML model. Notably, the system may only maintain a limited number of corresponding historical versions of the global ML model for the sake of memory efficiency. Accordingly, the system may discard or purge older corresponding historical versions of the global ML model since these older corresponding historical versions of the global ML model do not include as much knowledge as more recently generated and/or updated corresponding historical versions of the global ML model.

Turning now to FIG. 5B, a flowchart illustrating an example method 500A of utilizing stale update(s) received from straggler computing device(s) to improve decentralized learning of machine learning model(s) (*e.g*., "Federated Asynchronous Straggler Training on Mismatched and Stale Gradients" (FeAST on MSG)) is depicted. For convenience, the operations of the method 500B are described with reference to a system that performs the operations. The system of method 500B includes one or more processors and/or other component(s) of a computing device (*e.g*., the remote system 160 of FIG. 1, the cloud-based automated assistant component(s) 370 of FIG. 3, computing device 610 of FIG. 6, one or more high performance servers, and/or other computing devices). Moreover, while operations of the method 500B are shown in a particular order, this is not meant to be limiting. One or more operations may be reordered, omitted, or added.

At block 552B, the system determines whether one or more termination criteria for generating corresponding historical weights for a corresponding historical version of the global ML model are satisfied. The one or more termination criteria may include, for example, a threshold quantity of the stale updates being received from the straggler computing devices, a threshold duration of time lapsing subsequent to conclusion of the given round of decentralized learning for updating of the global ML model, and/or other termination criteria. This enables the system to ensure that each of the primary versions of the global ML model are associated with a corresponding historical version of the global ML model that is generated based on the stale updates received from the straggler computing devices during the subsequent round of decentralized learning. If, at an iteration of block 552B, the system determines that the one or more termination criteria are not satisfied, then the system may continue monitoring for satisfaction of the one or more termination criteria at block 552B. In the meantime, the system may continue receiving the stale updates from the straggler computing devices. If, at an iteration of block 552B, the system determines that the one or more termination criteria are satisfied, then the system may proceed to block 554B.

At block 554B, the system causes, based on the first subset of the corresponding updates (*e.g*., received at block 458 of the method 400 of FIG. 4) and based on the second subset of the corresponding updates (*e.g*., received at block 464 of the method 400 of FIG. 4), the primary version of the global ML model to be updated to generate corresponding historical weights for a corresponding historical version of the global ML model (*e.g*., as described with respect to FIG. 2B). At block 556B, the system generates, based on the updated primary version of the global ML model and based on the corresponding historical version of the global ML model, an auxiliary version of the global ML model (*e.g*., as described with respect to FIG. 2B).

At block 558B, the system determines whether a given additional round of decentralized learning for updating of the global ML model has been initiated. If, at an iteration of block 558B, the system determines that no given additional round of decentralized learning for updating of the global ML model has been initiated, then the system may continue monitoring for initiation of a given additional round of decentralized learning for updating of the global ML model at block 558B. If, at an iteration of block 558B, the system determines that a given additional round of decentralized learning for updating of the global ML model has been initiated, then the system may proceed to block 560B.

At block 560B, the system transmits, to an additional population of additional computing devices (*e.g*., that are in addition to the computing devices of the population from block 454 of the method 400 of FIG. 4), the updated primary weights for the updated primary version of the global ML model (*e.g*., from block 460 of the method 400 of FIG. 4). Notably, and in contrast with the method 500A of FIG. 5A, the system does not transmit any corresponding historical model to any of the computing devices of the additional population.

At block 562B, the system causes each of the additional computing devices of the additional population to generate an additional corresponding update for the updates primary version of the global ML model (*e.g*., as described with respect to the corresponding gradient engines and the corresponding learning engines of FIG. 1). At block 564B, the system asynchronously receives, from one or more of the additional computing devices of the additional population, an additional first subset of the additional corresponding updates for the updates primary version of the global ML model. At block 566B, the system causes, based on the additional first subset of the additional corresponding updates, the updated primary version of the global ML model to be further updated to generate further updated primary weights for a further updated primary version of the global ML model. Put another way, the system may continue to advance the primary version of the global ML model based on the corresponding updates that are received from the one or more additional computing devices of the population and during the given additional round of decentralized learning.

At block 568B, the system determines whether the given additional round of decentralized learning for updating of the global ML model has concluded. The system may determine whether the given round of decentralized learning has concluded based on a threshold quantity of corresponding updates being received from the computing devices of the population, based on a threshold duration of time lapsing since the given round of decentralized learning was initiated, and/or other criteria. If, at an iteration of block 568B, the system determines that the given additional round of decentralized learning for updating of the global ML model has not concluded, then the system may return to block 564B to continue asynchronously receiving, from one or more of the additional computing devices, the first subset of additional corresponding updates for the updated primary version of the global ML model. If, at an iteration of block 568B, the system determines that the given additional round of decentralized learning for updating of the global ML model has concluded, then the system may proceed to block 570B.

In various implementations, the system may wait for the given round of decentralized learning for updating of the global ML model to conclude prior to causing the primary version of the global ML model to be updated to generate the updated primary weights for the updated primary version of the global ML model. Further, and in response to determining that the given round of decentralized learning for updating of the global ML model has concluded, the system may automatically initiate a given additional round of decentralized learning for updating of the given ML model.

At block 570B, the system asynchronously receives, from one or more of the other additional computing devices of the additional population, a second subset of the additional corresponding updates for the updated primary version of the global ML model that were not received during the given additional round of decentralized learning for updating of the global ML model. The system may return to block 552B, and perform an additional iteration of the method 500B of FIG. 5B to continue generating additional corresponding historical versions of the global ML model.

Turning now to FIG. 6, a block diagram of an example computing device 610 that may optionally be utilized to perform one or more aspects of techniques described herein is depicted. In some implementations, one or more of a client device, cloud-based automated assistant component(s), and/or other component(s) may comprise one or more components of the example computing device 610.

Computing device 610 typically includes at least one processor 614 which communicates with a number of peripheral devices via bus subsystem 612. These peripheral devices may include a storage subsystem 624, including, for example, a memory subsystem 625 and a file storage subsystem 626, user interface output devices 620, user interface input devices 622, and a network interface subsystem 616. The input and output devices allow user interaction with computing device 610. Network interface subsystem 616 provides an interface to outside networks and is coupled to corresponding interface devices in other computing devices.

User interface input devices 622 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into computing device 610 or onto a communication network.

User interface output devices 620 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from computing device 610 to the user or to another machine or computing device.

Storage subsystem 624 stores programming and data constructs that provide the functionality of some or all of the modules described herein. For example, the storage subsystem 624 may include the logic to perform selected aspects of the methods disclosed herein, as well as to implement various components depicted in FIGS. 1 and 3.

These software modules are generally executed by processor 614 alone or in combination with other processors. Memory 625 used in the storage subsystem 624 can include a number of memories including a main random access memory (RAM) 630 for storage of instructions and data during program execution and a read only memory (ROM) 632 in which fixed instructions are stored. A file storage subsystem 626 can provide persistent storage for program and data files, and may include a hard disk drive, a floppy disk drive along with associated removable media, a CD-ROM drive, an optical drive, or removable media cartridges. The modules implementing the functionality of certain implementations may be stored by file storage subsystem 626 in the storage subsystem 624, or in other machines accessible by the processor(s) 614.

Bus subsystem 612 provides a mechanism for letting the various components and subsystems of computing device 610 communicate with each other as intended. Although bus subsystem 612 is shown schematically as a single bus, alternative implementations of the bus subsystem may use multiple busses.

Computing device 610 can be of varying types including a workstation, server, computing cluster, blade server, server farm, or any other data processing system or computing device. Due to the ever-changing nature of computers and networks, the description of computing device 610 depicted in FIG. 6 is intended only as a specific example for purposes of illustrating some implementations. Many other configurations of computing device 610 are possible having more or fewer components than the computing device depicted in FIG. 6.

In situations in which the systems described herein collect or otherwise monitor personal information about users, or may make use of personal and/or monitored information), the users may be provided with an opportunity to control whether programs or features collect user information (*e.g*., information about a user's social network, social actions or activities, profession, a user's preferences, or a user's current geographic location), or to control whether and/or how to receive content from the content server that may be more relevant to the user. Also, certain data may be treated in one or more ways before it is stored or used, so that personal identifiable information is removed. For example, a user's identity may be treated so that no personal identifiable information can be determined for the user, or a user's geographic location may be generalized where geographic location information is obtained (such as to a city, ZIP code, or state level), so that a particular geographic location of a user cannot be determined. Thus, the user may have control over how information is collected about the user and/or used.

In some implementations, a method implemented by one or more processors of a remote system is provided, and includes, for a given round of decentralized learning for updating of a global machine learning (ML) model: transmitting, to a population of computing devices, (i) primary weights for a primary version of the global ML model, and (ii) a corresponding historical version of the global ML model; causing each of the computing devices of the population to generate a corresponding update for the primary version of the of the global ML model via utilization of the primary version of the global ML model at each of the computing devices of the population and via utilization of the corresponding historical version of the global ML model as a corresponding teacher model at each of the computing devices of the population; asynchronously receiving, from one or more of the computing devices of the population, a first subset of the corresponding updates for the primary version of the global ML model; and causing, based on the first subset of the corresponding updates, the primary version of the global ML model to be updated to generate updated primary weights for an updated primary version of the global ML model. The method further includes, subsequent to the given round of decentralized learning for updating of the global ML model: asynchronously receiving, from one or more of the other computing devices of the population, a given corresponding update for the primary version of the global ML model that was not received during the given round of decentralized learning for updating of the global ML model; causing, based on the given corresponding update, corresponding historical weights for the corresponding historical version of the global ML model to be updated to generate a corresponding updated historical version of the global ML model for utilization in one or more subsequent rounds of decentralized learning for further updating of the global ML model; and in response to determining that one or more deployment criteria are satisfied, causing a most recently updated primary version of the global ML model to be deployed as a final version of the global ML model.

These and other implementations of the technology can include one or more of the following features.

In some implementations, the corresponding historical version of the global ML model may be one of a plurality of corresponding historical versions of the global ML model, and transmitting the corresponding historical version of the global ML model to the population of computing devices may include selecting, from among the plurality of corresponding historical versions of the global ML model, the corresponding historical version of the global ML model to transmit to each of the computing devices of the population.

In some versions of those implementations, selecting the corresponding historical version of the global ML model to transmit to each of the computing devices of the population and from among the plurality of corresponding historical versions of the global ML model may be based on a uniform and random distribution of the plurality of corresponding historical versions of the global ML model.

In additional or alternative versions of those implementations, a first computing device, of the computing devices of the population, may generate a first corresponding update, of the corresponding updates, via utilization of the primary version of the global ML model and via utilization of a first corresponding historical version of the global ML model, of the plurality of corresponding historical versions of the global ML model. Further, a second computing device, of the computing devices of the population, may generate a second corresponding update, of the corresponding updates, via utilization of the primary version of the global ML model and via utilization of a second corresponding historical version of the global ML model, of the plurality of corresponding historical versions of the global ML model.

In additional or alternative versions of those implementations, the method may further include, subsequent to causing the corresponding historical weights for the corresponding historical version of the global ML model to be updated to generate the corresponding updated historical version of the global ML model for utilization in one or more of the subsequent rounds of decentralized learning for further updating of the global ML model: purging an oldest corresponding historical version of the global ML model from the plurality of corresponding historical versions of the global ML model.

In some implementations, causing a given computing device, of the computing devices of the population, to generate the corresponding update for the primary version of the global ML model via utilization of the primary version of the global ML model at the given computing device and via utilization of the corresponding historical version of the global ML model as the corresponding teacher model may include causing the given computing device to: process, using the primary version of the global ML model, corresponding data obtained by the given computing device to generate one or more predicted outputs; process, using the corresponding historical version of the global ML model, the corresponding data obtained by the given computing device to determine a distillation regularization term; generate, based on at least the one or more predicted outputs and based on the distillation regularization term, a given corresponding update for the primary version of the global ML model; and transmit, to the remote system, the given corresponding update for the primary version of the global ML model.

In some versions of those implementations, the distillation regularization term may be determined based on one or more labels generated from processing the corresponding data obtained by the given computing device and using the corresponding historical version of the global ML model.

In some implementations, the primary weights for the primary for the primary version of the ML model may have been generated based on an immediately preceding round of the decentralized learning for updating of the global ML model, and the corresponding historical version of the global ML model may have been generated based on at least one further preceding round of the decentralized learning for updating of the global ML model that is prior to the immediately preceding round of the decentralized learning for updating of the global ML model.

In some implementations, the method may further include causing, based on the given corresponding update, prior corresponding historical weights for a prior corresponding historical version of the global ML model, that was generated based on at least one further preceding round of the decentralized learning for updating of the global ML model that is prior to the immediately preceding round of the decentralized learning for updating of the global ML model, to be updated to update the prior corresponding updated historical version of the global ML model for utilization in one or more of the subsequent rounds of decentralized learning for further updating of the global ML model.

In some implementations, the one or more deployment criteria may include one or more of: a threshold quantity of rounds of decentralized learning for updating of the global ML model being performed, or a threshold performance measure of the most recently updated primary version of the global ML model being achieved.

In some versions of those implementations, causing the most recently updated primary version of the global ML model to be deployed as the final version of the global ML model may include transmitting, to a plurality of computing devices, most recently updated primary weights for the most recently updated primary version of the global ML model. Transmitting the most recently updated primary weights for the most recently updated primary version of the global ML model to given computing device, of the plurality of computing device, may cause the given computing device to: replace any prior weights for a prior version of the global ML model with the most recently updated primary weights for the most recently updated primary version of the global ML model; and utilize the most recently updated primary version of the global ML model in processing corresponding data obtained at the given computing device.

In some implementations, the computing devices of the population may include client devices of a respective population of users. In additional or alternative implementations, the computing devices of the population may additionally, or alternatively, include remote servers.

In some implementations, a method implemented by one or more processors of a remote system is provided, and includes, for a given round of decentralized learning for updating of a global machine learning (ML) model: transmitting, to a population of computing devices, primary weights for a primary version of the global ML model; causing each of the computing devices of the population to generate a corresponding update for the primary version of the global ML model via utilization of the primary version of the global ML model at each of the computing devices of the population; asynchronously receiving, from one or more of the computing devices of the population, a first subset of the corresponding updates for the primary version of the global ML model; and causing, based on the first subset of the corresponding updates, the primary version of the global ML model to be updated to generate updated primary weights for an updated primary version of the global ML model. The method further includes, subsequent to the given round of decentralized learning for updating of the global ML model: asynchronously receiving, from one or more of the other computing devices of the population, a given corresponding update for the primary version of the global ML model that was not received during the given round of decentralized learning for updating of the global ML model; causing, based on the first subset of the corresponding updates and based on the given corresponding update, the primary version of the global ML model to be updated to generate corresponding historical weights for a corresponding historical version of the global ML model; causing the corresponding historical version of the global ML model to be utilized in one or more subsequent rounds of decentralized learning for further updating of the global ML model; and in response to determining that one or more deployment criteria are satisfied, causing a most recently updated version of the global ML model to be deployed as a final version of the global ML model.

These and other implementations of the technology can include one or more of the following features.

In some implementations, the method may further include, for a given additional round of decentralized learning for updating of the global ML model: transmitting, to an additional population of additional computing devices, (i) the updated primary weights for the updated primary version of the global ML model, and (ii) the corresponding historical version of the global ML model; causing each of the additional computing devices of the additional population to generate an additional corresponding update for the updated primary version of the of the global ML model via utilization of the updated primary version of the global ML model at each of the additional computing devices of the additional population and via utilization of the corresponding historical version of the global ML model as a corresponding teacher model at each of the additional computing devices of the additional population; asynchronously receiving, from one or more of the additional computing devices of the additional population, an additional first subset of the additional corresponding updates for the updated primary version of the global ML model; and causing, based on the additional first subset of the additional corresponding updates, the updated primary version of the global ML model to be updated to generate further updated primary weights for a further updated primary version of the global ML model. The method may further include, subsequent to the given additional round of decentralized learning for updating of the global ML model: asynchronously receiving, from one or more of the other additional computing devices of the additional population, a given additional corresponding update for the updated primary version of the global ML model that was not received during the given additional round of decentralized learning for updating of the global ML model; causing, based on the given additional corresponding update, the corresponding historical weights for the corresponding historical version of the global ML model to be updated to generate a corresponding updated historical version of the global ML model for utilization in one or more of the subsequent rounds of decentralized learning for further updating of the global ML model; causing, based on the given additional corresponding update, the updated primary version of the global ML model to be updated to generate additional corresponding historical weights for an additional corresponding historical version of the global ML model for utilization in one or more of the subsequent rounds of decentralized learning for further updating of the global ML model; and in response to determining that one or more deployment criteria are satisfied, causing the most recently updated version of the global ML model to be deployed as the final version of the global ML model.

In some implementations, a method implemented by one or more processors of a remote system is provided, and includes, for a given round of decentralized learning for updating of a global machine learning (ML) model: transmitting, to a population of computing devices, primary weights for a primary version of the global ML model; causing each of the computing devices of the population to generate a corresponding update for the primary version of the global ML model via utilization of the primary version of the global ML model at each of the computing devices; asynchronously receiving, from one or more of the computing devices of the population, a first subset of the corresponding updates for the primary version of the global ML model; and causing, based on the first subset of the corresponding updates, the primary version of the global ML model to be updated to generate updated primary weights for an updated primary version of the global ML model. The method further includes, subsequent to the given round of decentralized learning for updating of the global ML model: asynchronously receiving, from one or more of the other computing devices of the population, a second subset of the corresponding updates for the primary version of the global ML model that were not received during the given round of decentralized learning for updating of the global ML model; causing, based on the first subset of the corresponding updates and based on the second subset of the corresponding updates, the primary version of the global ML model to be updated to generate historical weights for a historical version of the global ML model; generating, based on the updated primary version of the global ML model and based on the historical version of the global ML model, an auxiliary version of the global ML model; and in response to determining that one or more deployment criteria are satisfied, causing the auxiliary version of the global ML model to be deployed as a final version of the global ML model.

These and other implementations of the technology can include one or more of the following features.

In some implementations, and in response to determining that the one or more deployment criteria are not satisfied, the method may further include, for a given additional round of decentralized learning for updating of the global ML model that is subsequent to the given round of decentralized learning for updating of the global ML model: transmitting, to an additional population of additional computing devices, the updated primary weights for the updated primary version of the global ML model; causing each of the additional computing devices of the additional population to generate an additional corresponding update for the updated primary version of the global ML model via utilization of the updated primary version of the global ML model at each of the additional computing devices of the additional population; asynchronously receiving, from one or more of the additional computing devices of the population, an additional first subset of the additional corresponding updates for the updated primary version of the global ML model; and causing, based on the additional first subset of the additional corresponding updates, the updated primary version of the global ML model to be updated to generate further updated primary weights for a further updated primary version of the global ML model. The method may further include, and in response to determining that the one or more deployment criteria are not satisfied, and subsequent to the given additional round of decentralized learning for updating of the global ML model: asynchronously receiving, from one or more of the other additional computing devices of the population, an additional second subset of the additional corresponding updates for the updated primary version of the global ML model that were not received during the given additional round of decentralized learning for updating of the global ML model; causing, based on the additional first subset of the additional corresponding updates and based on the additional second subset of the additional corresponding updates, the updated primary version of the global ML model to be updated to generate updated historical weights for an updated historical version of the global ML model; generating, based on the auxiliary version of the global ML model and based on the updated historical version of the global ML model, an updated auxiliary version of the global ML model; and in response to determining that the one or more deployment criteria are satisfied, causing the updated auxiliary version of the global ML model to be deployed as the final version of the global ML model.

In some versions of those implementations, the one or more deployment criteria may include one or more of: a threshold quantity of rounds of decentralized learning for updating of the global ML model being performed, a threshold quantity of auxiliary versions of the global ML model being generated, or a threshold performance measure of the auxiliary version of the global ML model or the updated auxiliary version of the being achieved.

In some implementations, causing the primary version of the global ML model to be updated to generate the updated primary weights for the updated primary version of the global ML model may be based on the first subset of the corresponding updates is in response to determining that the one or more update criteria satisfied. In some versions of those implementations, the one or more update criteria may include one or more of: a threshold quantity of the corresponding updates being received from the one or more of the computing devices of the population and during the given round of decentralized learning for updating of the global ML model, or a threshold duration of time lapsing prior to conclusion of the given round of decentralized learning for updating of the global ML model.

In some implementations, causing the primary version of the global ML model to be updated to generate the historical weights for the historical version of the global ML model based on the first subset of the corresponding updates and based on the second subset of the corresponding updates may be in response to determining that one or more termination criteria are satisfied.

In some versions of those implementations, the one or more termination criteria may include one or more of: a threshold quantity of the corresponding updates being received from the one or more other computing devices of the population, or a threshold duration of time lapsing subsequent to conclusion of the given round of decentralized learning for updating of the global ML model.

In some implementations, the method may further include, subsequent to generating the auxiliary version of the global ML model, discarding the historical version of the global ML model.

Generating the auxiliary version of the global ML model is based on a weighted combination of the updated primary version of the global ML model and the historical version of the global ML model.

In some versions of those implementations, the weighted combination of the updated primary version of the global ML model and the historical version of the global ML model may be weighted using one or more of: a tuneable scaling factor or a tuneable gradient mismatch factor.

In some implementations, causing the auxiliary version of the global ML model to be deployed as the final version of the global ML model may include transmitting, to a plurality of computing devices, auxiliary weights for the auxiliary version of the global ML model. Transmitting the auxiliary weights for the auxiliary version of the global ML model to a given computing device, of the plurality of computing device, may cause the given computing device to: replace any prior weights for a prior version of the global ML model with the auxiliary weights for the auxiliary version of the global ML model; and utilize the auxiliary version of the global ML model in processing corresponding data obtained at the given computing device.

In some implementations, causing a given computing device, of the computing devices of the population, to generate the corresponding update for the primary version of the global ML model via utilization of the primary version of the global ML model at the given computing device may include causing the given computing device to: process, using the primary version of the global ML model, corresponding data obtained by the given computing device to generate one or more predicted outputs; generate, based on at least the one or more predicted outputs, a given corresponding update for the primary version of the global ML model; and transmit, to the remote system, the given corresponding update for the primary version of the global ML model.

In some versions of those implementations, causing the given computing device to generate the given corresponding update for the primary version of the global ML model based on at least the one or more predicted outputs may include causing the given computing device to utilize one or more of: a supervised learning technique, a semi-supervised learning technique, or an unsupervised learning technique.

In some implementations, the corresponding updates for the primary version of the global ML model may include corresponding gradients, and causing the primary version of the global ML model to be updated to generate the updated primary weights for the updated primary version of the global ML model may include utilizing a gradient averaging technique.

In some implementations, the computing devices of the population comprise client devices of a respective population of users. In additional or alternative versions of those implementations, the computing devices of the population may include remote servers.

Various implementations can include a non-transitory computer readable storage medium storing instructions executable by one or more processors (e.g., central processing unit(s) (CPU(s)), graphics processing unit(s) (GPU(s)), digital signal processor(s) (DSP(s)), and/or tensor processing unit(s) (TPU(s)) to perform a method such as one or more of the methods described herein. Other implementations can include an automated assistant client device (*e.g.,* a client device including at least an automated assistant interface for interfacing with cloud-based automated assistant component(s)) that includes processor(s) operable to execute stored instructions to perform a method, such as one or more of the methods described herein. Yet other implementations can include a system of one or more servers that include one or more processors operable to execute stored instructions to perform a method such as one or more of the methods described herein. Yet other implementations can include a system of one or more client devices that each include one or more processors operable to execute stored instructions to perform a method such as one or more of the methods described herein or select aspects of one or more of the methods described herein.

## Claims

1. A method implemented by one or more remote processors of a remote system (160), the method comprising:
for a given round of decentralized learning for updating of a global machine learning, ML, model:
transmitting, to a population of computing devices (120₁, 120_{N}, 310), primary weights for a primary version (202, 204, 206, 208) of the global ML model (172A), and a corresponding historical version (210, 212, 214) of the global ML model, wherein the corresponding historical version of the global ML model is generated based on a subset of updates used to update the primary weights for the primary version of the global ML and a subset of updates received by the remote processors after the primary weights for the primary version of the global ML have been updated;
causing each of the computing devices of the population to generate a corresponding update (120C₁, 120C_{N}) for the primary version of the of the global ML model via utilization of the primary version of the global ML model at each of the computing devices of the population and via utilization of the corresponding historical version of the global ML model as a corresponding teacher model at each of the computing devices of the population;
asynchronously receiving, from one or more of the computing devices of the population, a first subset of the corresponding updates for the primary version of the global ML model; and
causing, based on the first subset of the corresponding updates, the primary version of the global ML model to be updated to generate updated primary weights for an updated primary version of the global ML model; and
subsequent to the given round of decentralized learning for updating of the global ML model:
asynchronously receiving, from one or more of the other computing devices of the population, a given corresponding update for the primary version of the global ML model that was not received during the given round of decentralized learning for updating of the global ML model;
causing, based on the given corresponding update, corresponding historical weights for the corresponding historical version of the global ML model to be updated to generate a corresponding updated historical version of the global ML model for utilization in one or more subsequent rounds of decentralized learning for further updating of the global ML model; and
in response to determining that one or more deployment criteria are satisfied, causing a most recently updated primary version of the global ML model to be deployed as a final version (216) of the global ML model.

2. The method of claim 1, wherein the corresponding historical version (210, 212, 214) of the global ML model is one of a plurality of corresponding historical versions of the global ML model, and wherein transmitting the corresponding historical version of the global ML model to the population of computing devices (120₁, 120_{N}, 310) comprises:
selecting, from among the plurality of corresponding historical versions of the global ML model, the corresponding historical version of the global ML model to transmit to each of the computing devices of the population.

3. The method of claim 2, wherein selecting the corresponding historical version (210, 212, 214) of the global ML model to transmit to each of the computing devices (120₁, 120_{N}, 310) of the population and from among the plurality of corresponding historical versions of the global ML model is based on a uniform and random distribution of the plurality of corresponding historical versions of the global ML model.

4. The method of claim 2 or claim 3, wherein a first computing device, of the computing devices (120₁, 120_{N}, 310) of the population, generates a first corresponding update (120C₁, 120C_{N}), of the corresponding updates, via utilization of the primary version (202, 204, 206, 208) of the global ML model and via utilization of a first corresponding historical version (210, 212, 214) of the global ML model, of the plurality of corresponding historical versions of the global ML model, and wherein a second computing device, of the computing devices of the population, generates a second corresponding update, of the corresponding updates, via utilization of the primary version of the global ML model and via utilization of a second corresponding historical version of the global ML model, of the plurality of corresponding historical versions of the global ML model.

5. The method of any one of claims 2 to 4, further comprising:
subsequent to causing the corresponding historical weights for the corresponding historical version (210, 212, 214) of the global ML model to be updated to generate the corresponding updated historical version of the global ML model for utilization in one or more of the subsequent rounds of decentralized learning for further updating of the global ML model:
purging an oldest corresponding historical version of the global ML model from the plurality of corresponding historical versions of the global ML model.

6. The method of any preceding claim, wherein causing a given computing device, of the computing devices (120₁, 120_{N}, 310) of the population, to generate the corresponding update (120C₁, 120C_{N}) for the primary version (202, 204, 206, 208) of the global ML model via utilization of the primary version of the global ML model at the given computing device and via utilization of the corresponding historical version (210, 212, 214) of the global ML model as the corresponding teacher model comprises causing the given computing device to:
process, using the primary version of the global ML model, corresponding data obtained by the given computing device to generate one or more predicted outputs;
process, using the corresponding historical version of the global ML model, the corresponding data obtained by the given computing device to determine a distillation regularization term;
generate, based on at least the one or more predicted outputs and based on the distillation regularization term, a given corresponding update for the primary version of the global ML model; and
transmit, to the remote system (160), the given corresponding update for the primary version of the global ML model.

7. The method of claim 6, wherein the distillation regularization term is determined based on one or more labels generated from processing the corresponding data obtained by the given computing device and using the corresponding historical version (210, 212, 214) of the global ML model.

8. The method of any preceding claim, wherein the primary weights for the primary version (202, 204, 206, 208) of the ML model were generated based on an immediately preceding round of the decentralized learning for updating of the global ML model, and wherein the corresponding historical version (210, 212, 214) of the global ML model was generated based on at least one further preceding round of the decentralized learning for updating of the global ML model that is prior to the immediately preceding round of the decentralized learning for updating of the global ML model.

9. The method of any preceding claim, further comprising:
causing, based on the given corresponding update (120C₁, 120C_{N}), prior corresponding historical weights for a prior corresponding historical version (210, 212, 214) of the global ML model, that was generated based on at least one further preceding round of the decentralized learning for updating of the global ML model that is prior to the immediately preceding round of the decentralized learning for updating of the global ML model, to be updated to update the prior corresponding updated historical version of the global ML model for utilization in one or more of the subsequent rounds of decentralized learning for further updating of the global ML model.

10. The method of any preceding claim, wherein the one or more deployment criteria comprise one or more of: a threshold quantity of rounds of decentralized learning for updating of the global ML model being performed, or a threshold performance measure of the most recently updated primary version (202, 204, 206, 208) of the global ML model being achieved.

11. The method of claim 10, wherein causing the most recently updated primary version (202, 204, 206, 208) of the global ML model to be deployed as the final version of the global ML model comprises:
transmitting, to a plurality of computing devices (120₁, 120_{N}, 310), most recently updated primary weights for the most recently updated primary version of the global ML model, wherein transmitting the most recently updated primary weights for the most recently updated primary version of the global ML model to given computing device, of the plurality of computing device, causes the given computing device to:
replace any prior weights for a prior version of the global ML model with the most recently updated primary weights for the most recently updated primary version of the global ML model; and
utilize the most recently updated primary version of the global ML model in processing corresponding data obtained at the given computing device.

12. A method implemented by one or more processors of a remote system (160), the method comprising:
for a given round of decentralized learning for updating of a global machine learning, ML, model:
transmitting, to a population of computing devices (120₁, 120_{N}, 310), primary weights for a primary version (202, 204, 206, 208) of the global ML model;
causing each of the computing devices of the population to generate a corresponding update (120C₁, 120C_{N}) for the primary version of the global ML model via utilization of the primary version of the global ML model at each of the computing devices of the population;
asynchronously receiving, from one or more of the computing devices of the population, a first subset of the corresponding updates for the primary version of the global ML model; and
causing, based on the first subset of the corresponding updates, the primary version of the global ML model to be updated to generate updated primary weights for an updated primary version of the global ML model; and
subsequent to the given round of decentralized learning for updating of the global ML model:
asynchronously receiving, from one or more of the other computing devices of the population, a given corresponding update for the primary version of the global ML model that was not received during the given round of decentralized learning for updating of the global ML model;
causing, based on the first subset of the corresponding updates and based on the given corresponding update, the primary version of the global ML model to be updated to generate corresponding historical weights for a corresponding historical version (210, 212, 214) of the global ML model;
causing the corresponding historical version of the global ML model to be utilized in one or more subsequent rounds of decentralized learning for further updating of the global ML model; and
in response to determining that one or more deployment criteria are satisfied, causing a most recently updated version of the global ML model to be deployed as a final version of the global ML model.

13. A method implemented by one or more remote processors of a remote system (160), the method comprising:
for a given round of decentralized learning for updating of a global machine learning, ML, model:
transmitting, to a population of computing devices (120₁, 120_{N}, 310), primary weights for a primary version (202, 204, 206, 208) of the global ML model;
causing each of the computing devices of the population to generate a corresponding update (120C₁, 120C_{N}) for the primary version of the global ML model via utilization of the primary version of the global ML model at each of the computing devices;
asynchronously receiving, from one or more of the computing devices of the population, a first subset of the corresponding updates for the primary version of the global ML model; and
causing, based on the first subset of the corresponding updates, the primary version of the global ML model to be updated to generate updated primary weights for an updated primary version of the global ML model; and
subsequent to the given round of decentralized learning for updating of the global ML model:
asynchronously receiving, from one or more of the other computing devices of the population, a second subset of the corresponding updates for the primary version of the global ML model that were not received during the given round of decentralized learning for updating of the global ML model;
causing, based on the first subset of the corresponding updates and based on the second subset of the corresponding updates, the primary version of the global ML model to be updated to generate historical weights for a historical version (210, 212, 214) of the global ML model;
generating, based on a weighted combination of the updated primary version of the global ML model and the historical version of the global ML model, an auxiliary version of the global ML model; and
in response to determining that one or more deployment criteria are satisfied, causing the auxiliary version of the global ML model to be deployed as a final version of the global ML model.

14. A system (610) comprising:
one or more processors (614); and
memory storing instructions that, when executed by the one or more processors, cause the one or more processors to perform the method of any one of claims 1 to 13.

15. A non-transitory computer-readable storage medium storing instructions that, when executed by one or more processors (614), cause the one or more processors to perform operations according to the method of any one of claims 1 to 13.

## Patentansprüche

1. Verfahren, das durch einen oder mehrere Remote-Prozessoren eines Remote-Systems (160) implementiert wird, wobei das Verfahren Folgendes umfasst:
für eine jeweilige Runde von dezentralem Lernen zur Aktualisierung eines globalen Maschinenlern-, ML-, Modells:
Übertragen, an eine Population von Rechenvorrichtungen (120₁, 120_{N}, 310), von primären Gewichten für eine primäre Version (202, 204, 206, 208) des globalen ML-Modells (172A) und einer entsprechenden historischen Version (210, 212, 214) des globalen ML-Modells, wobei die entsprechende historische Version des globalen ML-Modells basierend auf einer Teilmenge von Aktualisierungen, die verwendet wird, um die primären Gewichte für die primäre Version des globalen ML zu aktualisieren, und einer Teilmenge von Aktualisierungen, die durch die Remote-Prozessoren empfangen wird, nachdem die primären Gewichte für die primäre Version des globalen ML aktualisiert wurden, erzeugt wird;
Veranlassen jeder der Rechenvorrichtungen der Population, eine entsprechende Aktualisierung (120C₁, 120C_{N}) für die primäre Version des globalen ML-Modells über Nutzung der primären Version des globalen ML-Modells an jeder der Rechenvorrichtungen der Population und über Nutzung der entsprechenden historischen Version des globalen ML-Modells als ein entsprechendes Lehrermodell an jeder der Rechenvorrichtungen der Population zu erzeugen;
asynchrones Empfangen einer ersten Teilmenge der entsprechenden Aktualisierungen für die primäre Version des globalen ML-Modells von einer oder mehreren der Rechenvorrichtungen der Population; und
Veranlassen, basierend auf der ersten Teilmenge der entsprechenden Aktualisierungen, dass die primäre Version des globalen ML-Modells aktualisiert wird, um aktualisierte primäre Gewichte für eine aktualisierte primäre Version des globalen ML-Modells zu erzeugen; und
im Anschluss an die jeweilige Runde von dezentralem Lernen zur Aktualisierung des globalen ML-Modells:
asynchrones Empfangen, von einer oder mehreren der anderen Rechenvorrichtungen der Population, einer jeweiligen entsprechenden Aktualisierung für die primäre Version des globalen ML-Modells, die während der jeweiligen Runde von dezentralem Lernen zur Aktualisierung des globalen ML-Modells nicht empfangen wurde;
Veranlassen, basierend auf der jeweiligen entsprechenden Aktualisierung, dass entsprechende historische Gewichte für die entsprechende historische Version des globalen ML-Modells aktualisiert werden, um eine entsprechende aktualisierte historische Version des globalen ML-Modells zur Nutzung in einer oder mehreren nachfolgenden Runden von dezentralem Lernen zur weiteren Aktualisierung des globalen ML-Modells zu erzeugen; und
als Reaktion auf Bestimmen, dass ein oder mehrere Einsatzkriterien erfüllt sind, Veranlassen, dass eine zuletzt aktualisierte primäre Version des globalen ML-Modells als eine endgültige Version (216) des globalen ML-Modells eingesetzt wird.

2. Verfahren nach Anspruch 1, wobei die entsprechende historische Version (210, 212, 214) des globalen ML-Modells eine einer Mehrzahl von entsprechenden historischen Versionen des globalen ML-Modells ist, und wobei Übertragen der entsprechenden historischen Version des globalen ML-Modells an die Population von Rechenvorrichtungen (120₁, 120_{N}, 310) Folgendes umfasst:
Auswählen der entsprechenden historischen Version des globalen ML-Modells aus der Mehrzahl von entsprechenden historischen Versionen des globalen ML-Modells zur Übertragung an jede der Rechenvorrichtungen der Population.

3. Verfahren nach Anspruch 2, wobei Auswählen der entsprechenden historischen Version (210, 212, 214) des globalen ML-Modells zur Übertragung an jede der Rechenvorrichtungen (120₁, 120_{N}, 310) der Population und aus der Mehrzahl von entsprechenden historischen Versionen des globalen ML-Modells auf einer gleichmäßigen und zufälligen Verteilung der Mehrzahl von entsprechenden historischen Versionen des globalen ML-Modells basiert.

4. Verfahren nach Anspruch 2 oder Anspruch 3, wobei eine erste Rechenvorrichtung der Rechenvorrichtungen (120₁, 120_{N}, 310) der Population eine erste entsprechende Aktualisierung (120C₁, 120C_{N}) der entsprechenden Aktualisierungen über Nutzung der primären Version (202, 204, 206, 208) des globalen ML-Modells und über Nutzung einer ersten entsprechenden historischen Version (210, 212, 214) des globalen ML-Modells der Mehrzahl von entsprechenden historischen Versionen des globalen ML-Modells erzeugt, und wobei eine zweite Rechenvorrichtung der Rechenvorrichtungen der Population eine zweite entsprechende Aktualisierung der entsprechenden Aktualisierungen über Nutzung der primären Version des globalen ML-Modells und über Nutzung einer zweiten entsprechenden historischen Version des globalen ML-Modells der Mehrzahl von entsprechenden historischen Versionen des globalen ML-Modells erzeugt.

5. Verfahren nach einem der Ansprüche 2 bis 4, ferner umfassend:
im Anschluss an das Veranlassen, dass die entsprechenden historischen Gewichte für die entsprechende historische Version (210, 212, 214) des globalen ML-Modells aktualisiert werden, um die entsprechende aktualisierte historische Version des globalen ML-Modells zur Nutzung in einer oder mehreren der nachfolgenden Runden von dezentralem Lernen zur weiteren Aktualisierung des globalen ML-Modells zu erzeugen:
Löschen einer ältesten entsprechenden historischen Version des globalen ML-Modells aus der Mehrzahl von entsprechenden historischen Versionen des globalen ML-Modells.

6. Verfahren nach einem der vorhergehenden Ansprüche, wobei Veranlassen einer jeweiligen Rechenvorrichtung der Rechenvorrichtungen (120₁, 120_{N}, 310) der Population, die entsprechende Aktualisierung (120C₁, 120C_{N}) für die primäre Version (202, 204, 206, 208) des globalen ML-Modells über Nutzung der primären Version des globalen ML-Modells an der jeweiligen Rechenvorrichtung und über Nutzung der entsprechenden historischen Version (210, 212, 214) des globalen ML-Modells als das entsprechende Lehrermodell zu erzeugen, das Veranlassen der jeweiligen Rechenvorrichtung zu Folgendem umfasst:
Verarbeiten, unter Verwendung der primären Version des globalen ML-Modells, entsprechender Daten, die durch die jeweilige Rechenvorrichtung erhalten werden, um eine oder mehrere vorhergesagte Ausgaben zu erzeugen;
Verarbeiten, unter Verwendung der entsprechenden historischen Version des globalen ML-Modells, der entsprechenden Daten, die durch die jeweilige Rechenvorrichtung erhalten werden, um einen Destillationsregularisierungsterm zu bestimmen;
Erzeugen, basierend auf zumindest der einen oder den mehreren vorhergesagten Ausgaben und basierend auf dem Destillationsregularisierungsterm, einer jeweiligen entsprechenden Aktualisierung für die primäre Version des globalen ML-Modells; und
Übertragen der jeweiligen entsprechenden Aktualisierung für die primäre Version des globalen ML-Modells an das Remote-System (160).

7. Verfahren nach Anspruch 6, wobei der Destillationsregularisierungsterm basierend auf einem oder mehreren Labels bestimmt wird, die aus dem Verarbeiten der durch die jeweilige Rechenvorrichtung erhaltenen entsprechenden Daten und unter Verwendung der entsprechenden historischen Version (210, 212, 214) des globalen ML-Modells erzeugt werden.

8. Verfahren nach einem der vorhergehenden Ansprüche, wobei die primären Gewichte für die primäre Version (202, 204, 206, 208) des ML-Modells basierend auf einer unmittelbar vorhergehenden Runde des dezentralen Lernens zur Aktualisierung des globalen ML-Modells erzeugt wurden, und wobei die entsprechende historische Version (210, 212, 214) des globalen ML-Modells basierend auf mindestens einer weiteren vorhergehenden Runde des dezentralen Lernens zur Aktualisierung des globalen ML-Modells erzeugt wurde, die vor der unmittelbar vorhergehenden Runde des dezentralen Lernens zur Aktualisierung des globalen ML-Modells liegt.

9. Verfahren nach einem der vorhergehenden Ansprüche, ferner umfassend:
Veranlassen, basierend auf der jeweiligen entsprechenden Aktualisierung (120C₁, 120C_{N}), dass frühere entsprechende historische Gewichte für eine frühere entsprechende historische Version (210, 212, 214) des globalen ML-Modells, die basierend auf mindestens einer weiteren vorhergehenden Runde des dezentralen Lernens zur Aktualisierung des globalen ML-Modells erzeugt wurde, die vor der unmittelbar vorhergehenden Runde des dezentralen Lernens zur Aktualisierung des globalen ML-Modells liegt, aktualisiert werden, um die frühere entsprechende aktualisierte historische Version des globalen ML-Modells zur Nutzung in einer oder mehreren der nachfolgenden Runden von dezentralem Lernen zur weiteren Aktualisierung des globalen ML-Modells zu aktualisieren.

10. Verfahren nach einem der vorhergehenden Ansprüche, wobei das eine oder die mehreren Einsatzkriterien eines oder mehrere von Folgendem umfassen: einer Schwellenmenge von Runden von dezentralem Lernen zur Aktualisierung des globalen ML-Modells, die durchgeführt wird, oder einem Schwellenleistungsmaß der zuletzt aktualisierten primären Version (202, 204, 206, 208) des globalen ML-Modells, das erreicht wird.

11. Verfahren nach Anspruch 10, wobei Veranlassen, dass die zuletzt aktualisierte primäre Version (202, 204, 206, 208) des globalen ML-Modells als die endgültige Version des globalen ML-Modells eingesetzt wird, Folgendes umfasst:
Übertragen, an eine Mehrzahl von Rechenvorrichtungen (120₁, 120_{N}, 310), von zuletzt aktualisierten primären Gewichten für die zuletzt aktualisierte primäre Version des globalen ML-Modells, wobei Übertragen der zuletzt aktualisierten primären Gewichte für die zuletzt aktualisierte primäre Version des globalen ML-Modells an die jeweilige Rechenvorrichtung der Mehrzahl von Rechenvorrichtungen veranlasst, dass die jeweilige Rechenvorrichtung:
alle früheren Gewichte für eine frühere Version des globalen ML-Modells durch die zuletzt aktualisierten primären Gewichte für die zuletzt aktualisierte primäre Version des globalen ML-Modells ersetzt; und
die zuletzt aktualisierte primäre Version des globalen ML-Modells beim Verarbeiten entsprechender Daten, die an der jeweiligen Rechenvorrichtung erhalten werden, nutzt.

12. Verfahren, das durch einen oder mehrere Prozessoren eines Remote-Systems (160) implementiert wird, wobei das Verfahren Folgendes umfasst:
für eine jeweilige Runde von dezentralem Lernen zur Aktualisierung eines globalen Maschinenlern-, ML-, Modells:
Übertragen, an eine Population von Rechenvorrichtungen (120₁, 120_{N}, 310), von primären Gewichten für eine primäre Version (202, 204, 206, 208) des globalen ML-Modells;
Veranlassen jeder der Rechenvorrichtungen der Population, eine entsprechende Aktualisierung (120C₁, 120C_{N}) für die primäre Version des globalen ML-Modells über Nutzung der primären Version des globalen ML-Modells an jeder der Rechenvorrichtungen der Population zu erzeugen;
asynchrones Empfangen einer ersten Teilmenge der entsprechenden Aktualisierungen für die primäre Version des globalen ML-Modells von einer oder mehreren der Rechenvorrichtungen der Population; und
Veranlassen, basierend auf der ersten Teilmenge der entsprechenden Aktualisierungen, dass die primäre Version des globalen ML-Modells aktualisiert wird, um aktualisierte primäre Gewichte für eine aktualisierte primäre Version des globalen ML-Modells zu erzeugen; und
im Anschluss an die jeweilige Runde von dezentralem Lernen zur Aktualisierung des globalen ML-Modells:
asynchrones Empfangen, von einer oder mehreren der anderen Rechenvorrichtungen der Population, einer jeweiligen entsprechenden Aktualisierung für die primäre Version des globalen ML-Modells, die während der jeweiligen Runde von dezentralem Lernen zur Aktualisierung des globalen ML-Modells nicht empfangen wurde;
Veranlassen, basierend auf der ersten Teilmenge der entsprechenden Aktualisierungen und basierend auf der jeweiligen entsprechenden Aktualisierung, dass die primäre Version des globalen ML-Modells aktualisiert wird, um entsprechende historische Gewichte für eine entsprechende historische Version (210, 212, 214) des globalen ML-Modells zu erzeugen;
Veranlassen, dass die entsprechende historische Version des globalen ML-Modells in einer oder mehreren nachfolgenden Runden von dezentralem Lernen zur weiteren Aktualisierung des globalen ML-Modells genutzt wird; und
als Reaktion auf Bestimmen, dass ein oder mehrere Einsatzkriterien erfüllt sind, Veranlassen, dass eine zuletzt aktualisierte Version des globalen ML-Modells als eine endgültige Version des globalen ML-Modells eingesetzt wird.

13. Verfahren, das durch einen oder mehrere Remote-Prozessoren eines Remote-Systems (160) implementiert wird, wobei das Verfahren Folgendes umfasst:
für eine jeweilige Runde von dezentralem Lernen zur Aktualisierung eines globalen Maschinenlern-, ML-, Modells:
Übertragen, an eine Population von Rechenvorrichtungen (120₁, 120_{N}, 310), von primären Gewichten für eine primäre Version (202, 204, 206, 208) des globalen ML-Modells;
Veranlassen jeder der Rechenvorrichtungen der Population, eine entsprechende Aktualisierung (120C₁, 120C_{N}) für die primäre Version des globalen ML-Modells über Nutzung der primären Version des globalen ML-Modells an jeder der Rechenvorrichtungen zu erzeugen;
asynchrones Empfangen einer ersten Teilmenge der entsprechenden Aktualisierungen für die primäre Version des globalen ML-Modells von einer oder mehreren der Rechenvorrichtungen der Population; und
Veranlassen, basierend auf der ersten Teilmenge der entsprechenden Aktualisierungen, dass die primäre Version des globalen ML-Modells aktualisiert wird, um aktualisierte primäre Gewichte für eine aktualisierte primäre Version des globalen ML-Modells zu erzeugen; und
im Anschluss an die jeweilige Runde von dezentralem Lernen zur Aktualisierung des globalen ML-Modells:
asynchrones Empfangen, von einer oder mehreren der anderen Rechenvorrichtungen der Population, einer zweiten Teilmenge der entsprechenden Aktualisierungen für die primäre Version des globalen ML-Modells, die während der jeweiligen Runde von dezentralem Lernen zur Aktualisierung des globalen ML-Modells nicht empfangen wurden;
Veranlassen, basierend auf der ersten Teilmenge der entsprechenden Aktualisierungen und basierend auf der zweiten Teilmenge der entsprechenden Aktualisierungen, dass die primäre Version des globalen ML-Modells aktualisiert wird, um historische Gewichte für eine historische Version (210, 212, 214) des globalen ML-Modells zu erzeugen;
Erzeugen, basierend auf einer gewichteten Kombination der aktualisierten primären Version des globalen ML-Modells und der historischen Version des globalen ML-Modells, einer Hilfsversion des globalen ML-Modells; und
als Reaktion auf Bestimmen, dass ein oder mehrere Einsatzkriterien erfüllt sind, Veranlassen, dass die Hilfsversion des globalen ML-Modells als eine endgültige Version des globalen ML-Modells eingesetzt wird.

14. System (610), umfassend:
einen oder mehrere Prozessoren (614); und
einen Speicher, der Anweisungen speichert, die, wenn sie durch den einen oder die mehreren Prozessoren ausgeführt werden, den einen oder die mehreren Prozessoren veranlassen, das Verfahren nach einem der Ansprüche 1 bis 13 durchzuführen.

15. Nichtflüchtiges computerlesbares Speichermedium, das Anweisungen speichert, die, wenn sie durch einen oder mehrere Prozessoren (614) ausgeführt werden, den einen oder die mehreren Prozessoren veranlassen, Operationen gemäß dem Verfahren nach einem der Ansprüche 1 bis 13 durchzuführen.

## Revendications

1. Procédé mis en œuvre par un ou plusieurs processeurs distants d'un système distant (160), le procédé comprenant :
pour un cycle donné d'apprentissage décentralisé pour la mise à jour d'un modèle global d'apprentissage automatique, ML :
la transmission, à une population de dispositifs informatiques (120₁, 120_{N}, 310), de poids primaires pour une version primaire (202, 204, 206, 208) du modèle ML global (172A), et d'une version historique correspondante (210, 212, 214) du modèle ML global, dans lequel la version historique correspondante du modèle ML global est générée sur la base d'un sous-ensemble de mises à jour utilisées pour mettre à jour les poids primaires pour la version primaire du ML global et d'un sous-ensemble de mises à jour reçues par les processeurs distants après que les poids primaires pour la version primaire du ML global ont été mis à jour ;
le fait d'amener chacun des dispositifs informatiques de la population à générer une mise à jour correspondante (120C₁, 120C_{N}) pour la version primaire du modèle ML global via l'utilisation de la version primaire du modèle ML global sur chacun des dispositifs informatiques de la population et via l'utilisation de la version historique correspondante du modèle ML global comme modèle enseignant correspondant sur chacun des dispositifs informatiques de la population ;
la réception asynchrone, à partir d'un ou plusieurs dispositifs informatiques de la population, d'un premier sous-ensemble des mises à jour correspondantes pour la version primaire du modèle ML global ; et
le fait d'amener, sur la base du premier sous-ensemble des mises à jour correspondantes, la version primaire du modèle ML global à être mise à jour pour générer des poids primaires mis à jour pour une version primaire mise à jour du modèle ML global ; et
suite au cycle d'apprentissage décentralisé donné pour la mise à jour du modèle ML global :
la réception asynchrone, à partir d'un ou plusieurs autres dispositifs informatiques de la population, d'une mise à jour correspondante donnée pour la version primaire du modèle ML global qui n'a pas été reçue au cours du cycle donné d'apprentissage décentralisé pour la mise à jour du modèle ML global ;
le fait d'amener, sur la base de la mise à jour correspondante donnée, des poids historiques correspondants pour la version historique correspondante du modèle ML global à être mis à jour pour générer une version historique mise à jour correspondante du modèle ML global pour une utilisation dans un ou plusieurs cycles ultérieurs d'apprentissage décentralisé en vue d'une mise à jour ultérieure du modèle ML global ; et
en réponse à la détermination qu'un ou plusieurs critères de déploiement sont satisfaits, le fait d'amener une version primaire mise à jour la plus récente du modèle ML global à être déployée en tant que version finale (216) du modèle ML global.

2. Procédé selon la revendication 1, dans lequel la version historique correspondante (210, 212, 214) du modèle ML global est l'une d'une pluralité de versions historiques correspondantes du modèle ML global, et dans lequel la transmission de la version historique correspondante du modèle ML global à la population de dispositifs informatiques (120₁, 120_{N}, 310) comprend :
la sélection, parmi la pluralité de versions historiques correspondantes du modèle ML global, de la version historique correspondante du modèle ML global à transmettre à chacun des dispositifs informatiques de la population.

3. Procédé selon la revendication 2, dans lequel la sélection de la version historique correspondante (210, 212, 214) du modèle ML global à transmettre à chacun des dispositifs informatiques (120₁, 120_{N}, 310) de la population et parmi la pluralité de versions historiques correspondantes du modèle ML global est basée sur une distribution uniforme et aléatoire de la pluralité de versions historiques correspondantes du modèle ML global.

4. Procédé selon la revendication 2 ou la revendication 3, dans lequel un premier dispositif informatique, parmi les dispositifs informatiques (120₁, 120_{N}, 310) de la population, génère une première mise à jour correspondante (120C₁, 120C_{N}), parmi les mises à jour correspondantes, via l'utilisation de la version primaire (202, 204, 206, 208) du modèle ML global et via l'utilisation d'une première version historique correspondante (210, 212, 214) du modèle ML global, de la pluralité de versions historiques correspondantes du modèle ML global, et dans lequel un second dispositif informatique, parmi les dispositifs informatiques de la population, génère une seconde mise à jour correspondante, parmi les mises à jour correspondantes, via l'utilisation de la version primaire du modèle ML global et via l'utilisation d'une seconde version historique correspondante du modèle ML global, de la pluralité de versions historiques correspondantes du modèle ML global.

5. Procédé selon l'une quelconque des revendications 2 à 4, comprenant en outre :
suite au fait d'amener les poids historiques correspondants pour la version historique correspondante (210, 212, 214) du modèle ML global à être mis à jour afin de générer la version historique mise à jour correspondante du modèle ML global pour une utilisation dans un ou plusieurs des cycles ultérieurs d'apprentissage décentralisé pour une mise à jour supplémentaire du modèle ML global :
la purge d'une version historique correspondante la plus ancienne du modèle ML global parmi la pluralité de versions historiques correspondantes du modèle ML global.

6. Procédé selon une quelconque revendication précédente, dans lequel le fait d'amener un dispositif informatique donné, parmi les dispositifs informatiques (120₁, 120_{N}, 310) de la population, à générer la mise à jour correspondante (120C₁, 120C_{N}) pour la version primaire (202, 204, 206, 208) du modèle ML global, via l'utilisation de la version primaire du modèle ML global sur le dispositif informatique donné et via l'utilisation de la version historique correspondante (210, 212, 214) du modèle ML global comme modèle enseignant correspondant, comprend le fait d'amener le dispositif informatique donné à :
traiter, à l'aide de la version primaire du modèle ML global, les données correspondantes obtenues par le dispositif informatique donné afin de générer une ou plusieurs sorties prédites ;
traiter, à l'aide de la version historique correspondante du modèle ML global, les données correspondantes obtenues par le dispositif informatique donné afin de déterminer un terme de régularisation de distillation ;
générer, sur la base au moins des une ou plusieurs sorties prédites et sur la base du terme de régularisation de distillation, une mise à jour correspondante donnée pour la version primaire du modèle ML global ; et
transmettre, au système distant (160), la mise à jour correspondante donnée pour la version primaire du modèle ML global.

7. Procédé selon la revendication 6, dans lequel le terme de régularisation de distillation est déterminé sur la base d'une ou plusieurs étiquettes générées à partir du traitement des données correspondantes obtenues par le dispositif informatique donné et à l'aide de la version historique correspondante (210, 212, 214) du modèle ML global.

8. Procédé selon l'une quelconque des revendications précédentes, dans lequel les poids primaires pour la version primaire (202, 204, 206, 208) du modèle ML ont été générés sur la base d'un cycle immédiatement précédent d'apprentissage décentralisé pour la mise à jour du modèle ML global, et dans lequel la version historique correspondante (210, 212, 214) du modèle ML global a été générée sur la base d'au moins un autre cycle précédent d'apprentissage décentralisé pour la mise à jour du modèle ML global qui est antérieur au cycle immédiatement précédent d'apprentissage décentralisé pour la mise à jour du modèle ML global.

9. Procédé selon une quelconque revendication précédente, comprenant en outre :
le fait d'amener, sur la base de la mise à jour correspondante donnée (120C₁, 120C_{N}), des poids historiques correspondants antérieurs pour une version historique correspondante antérieure (210, 212, 214) du modèle ML global, qui a été générée sur la base d'au moins un autre cycle précédent d'apprentissage décentralisé pour la mise à jour du modèle ML global qui est antérieur au cycle immédiatement précédent d'apprentissage décentralisé pour la mise à jour du modèle ML global, à être mis à jour pour mettre à jour la version historique mise à jour correspondante antérieure du modèle ML global pour une utilisation dans un ou plusieurs des cycles suivants d'apprentissage décentralisé pour une mise à jour ultérieure du modèle ML global.

10. Procédé selon une quelconque revendication précédente, dans lequel les un ou plusieurs critères de déploiement comprennent un ou plusieurs des éléments suivants : une quantité seuil de cycles d'apprentissage décentralisé pour la mise à jour du modèle ML global étant effectuée, ou une mesure de performance seuil de la version primaire la plus récemment mise à jour (202, 204, 206, 208) du modèle ML global étant atteinte.

11. Procédé selon la revendication 10, dans lequel le fait d'amener la version primaire la plus récemment mise à jour (202, 204, 206, 208) du modèle ML global à être déployée en tant que version finale du modèle ML global comprend :
la transmission, à une pluralité de dispositifs informatiques (120₁, 120_{N}, 310), de poids primaires les plus récemment mis à jour pour la version primaire la plus récemment mise à jour du modèle ML global, dans lequel la transmission des poids primaires les plus récemment mis à jour pour la version primaire la plus récemment mise à jour du modèle ML global à un dispositif informatique donné, parmi la pluralité de dispositifs informatiques, amène le dispositif informatique donné à :
remplacer tout poids antérieur d'une version précédente du modèle ML global par les poids primaires les plus récemment mis à jour pour la version primaire la plus récemment mise à jour du modèle ML global ; et
utiliser la version primaire la plus récente du modèle ML global pour traiter les données correspondantes obtenues sur le dispositif informatique donné.

12. Procédé mis en œuvre par un ou plusieurs processeurs d'un système distant (160), le procédé comprenant :
pour un cycle donné d'apprentissage décentralisé pour la mise à jour d'un modèle global d'apprentissage automatique, ML :
la transmission, à une population de dispositifs informatiques (120₁, 120_{N}, 310), de poids primaires pour une version primaire (202, 204, 206, 208) du modèle ML global ;
le fait d'amener chacun des dispositifs informatiques de la population à générer une mise à jour correspondante (120C₁, 120C_{N}) pour la version primaire du modèle ML global via l'utilisation de la version primaire du modèle ML global sur chacun des dispositifs informatiques de la population ;
la réception asynchrone, à partir d'un ou plusieurs dispositifs informatiques de la population, d'un premier sous-ensemble des mises à jour correspondantes pour la version primaire du modèle ML global ; et
le fait d'amener, sur la base du premier sous-ensemble des mises à jour correspondantes, la version primaire du modèle ML global à être mise à jour pour générer des poids primaires mis à jour pour une version primaire mise à jour du modèle ML global ; et
suite au cycle d'apprentissage décentralisé donné pour la mise à jour du modèle ML global :
la réception asynchrone, à partir d'un ou plusieurs autres dispositifs informatiques de la population, d'une mise à jour correspondante donnée pour la version primaire du modèle ML global qui n'a pas été reçue au cours du cycle donné d'apprentissage décentralisé pour la mise à jour du modèle ML global ;
le fait d'amener, sur la base du premier sous-ensemble des mises à jour correspondantes et sur la base de la mise à jour correspondante donnée, la version primaire du modèle ML global à être mise à jour pour générer des poids historiques correspondants pour une version historique correspondante (210, 212, 214) du modèle ML global ;
le fait d'amener la version historique correspondante du modèle ML global à être utilisée dans un ou plusieurs cycles ultérieurs d'apprentissage décentralisé pour une mise à jour supplémentaire du modèle ML global ; et
en réponse à la détermination qu'un ou plusieurs critères de déploiement sont satisfaits, le fait d'amener une version mise à jour la plus récente du modèle ML global à être déployée en tant que version finale du modèle ML global.

13. Procédé mis en œuvre par un ou plusieurs processeurs distants d'un système distant (160), le procédé comprenant :
pour un cycle donné d'apprentissage décentralisé pour la mise à jour d'un modèle global d'apprentissage automatique, ML :
la transmission, à une population de dispositifs informatiques (120₁, 120_{N}, 310), de poids primaires pour une version primaire (202, 204, 206, 208) du modèle ML global ;
le fait d'amener chacun des dispositifs informatiques de la population à générer une mise à jour correspondante (120C₁, 120C_{N}) pour la version primaire du modèle ML global via l'utilisation de la version primaire du modèle ML global sur chacun des dispositifs informatiques ;
la réception asynchrone, à partir d'un ou plusieurs dispositifs informatiques de la population, d'un premier sous-ensemble des mises à jour correspondantes pour la version primaire du modèle ML global ; et
le fait d'amener, sur la base du premier sous-ensemble des mises à jour correspondantes, la version primaire du modèle ML global à être mise à jour pour générer des poids primaires mis à jour pour une version primaire mise à jour du modèle ML global ; et
suite au cycle d'apprentissage décentralisé donné pour la mise à jour du modèle ML global :
la réception asynchrone, à partir d'un ou plusieurs autres dispositifs informatiques de la population, d'un second sous-ensemble des mises à jour correspondantes pour la version primaire du modèle ML global qui n'ont pas été reçues au cours du cycle donné d'apprentissage décentralisé pour la mise à jour du modèle ML global ;
le fait d'amener, sur la base du premier sous-ensemble des mises à jour correspondantes et sur la base du second sous-ensemble des mises à jour correspondantes, la version primaire du modèle ML global à être mise à jour pour générer des poids historiques pour une version historique (210, 212, 214) du modèle ML global ;
la génération, sur la base d'une combinaison pondérée de la version primaire mise à jour du modèle ML global et de la version historique du modèle ML global, d'une version auxiliaire du modèle ML global ; et
en réponse à la détermination qu'un ou plusieurs critères de déploiement sont satisfaits, le fait d'amener la version auxiliaire du modèle ML global à être déployée en tant que version finale du modèle ML global.

14. Système (610), comprenant :
un ou plusieurs processeurs (614) ; et
une mémoire stockant des instructions qui, lorsqu'elles sont exécutées par les un ou plusieurs processeurs, amènent les un ou plusieurs processeurs à réaliser le procédé selon l'une quelconque des revendications 1 à 13.

15. Support de stockage non transitoire lisible par ordinateur stockant des instructions qui, lorsqu'elles sont exécutées par un ou plusieurs processeurs (614), amènent les un ou plusieurs processeurs à réaliser des opérations selon le procédé selon l'une quelconque des revendications 1 à 13.
